# EUROPÄISCHE PATENTSCHRIFT

(11) **EP 2 635 628 B1**
(45) Veröffentlichungstag und Bekanntmachung des Hinweises auf die Patenterteilung: **04.03.2015**
(21) Anmeldenummer: 11782104.1
(22) Anmeldetag: 04.11.2011
(51) Int. Cl.: C08J 9/28, C08J 9/12, C08K 5/01

(54) **VERFAHREN ZUR HERSTELLUNG EINES GESCHÄUMTEN MATERIALS, HIERBEI EINGESETZTE EMULSIONSFÖRMIGE ZUSAMMENSETZUNG UND HIERAUS ERHÄLTLICHES GESCHÄUMTES MATERIAL**
METHOD FOR PRODUCING A FOAMED MATERIAL, COMPOSITION IN THE FORM OF AN EMULSION USED IN SAID METHOD, AND FOAMED MATERIAL THAT CAN BE OBTAINED FROM SAID METHOD
PROCÉDÉ DE FABRICATION D'UN MATÉRIAU EXPANSÉ, COMPOSITION SOUS FORME D'ÉMULSION UTILISÉE DANS CE CADRE ET MATÉRIAU EXPANSÉ POUVANT ÊTRE OBTENU PAR LEDIT PROCÉDÉ

(30) Priorität: 05.11.2010 DE 102010060386
(43) Veröffentlichungstag der Anmeldung: 11.09.2013
(73) Patentinhaber: Bayer Intellectual Property GmbH, 40789 Monheim am Rhein (DE)
(72) Erfinder: LINDNER, Stefan, 50670 Köln (DE); FRIEDERICHS, Wolfgang, 50933 Köln (DE); STREY, Reinhard, 41540 Dormagen (DE); KHAZOVA, Elena, 68169 Mannheim (DE); SOTTMANN, Thomas, 50823 Köln (DE); ENGELEN, Diana, 51379 Leverkusen (DE); CHALBI, Agnes, Dominika, 50354 Hürth (DE)
(74) Vertreter: BIP Patents
(86) Internationale Anmeldenummer: PCT/EP2011/069382
(87) Internationale Veröffentlichungsnummer: WO 2012/059567

(56) Entgegenhaltungen:
- EP-A2- 0 353 061
- EP-B1- 1 236 762
- WO-A1-2011/054868

## Beschreibung

Die vorliegende Erfindung betrifft ein Verfahren zur Herstellung eines geschäumten Materials, wobei eine emulsionsförmige Zusammensetzung mit einer matrixbildenden Komponente, einer Tensidkomponente und einer nahe- oder überkritischen Treibmittelkomponente eine Druckerniedrigung erfährt. Sie betrifft weiterhin eine hierin einzusetzende emulsionsförmige Zusammensetzung und ein nach dem erfindungsgemäßen Verfahren erhältliches geschäumtes Material.

Ein Ziel gegenwärtiger technischer Forschungen und Entwicklungen ist es nanozelluläre Schäume zu erzeugen. Ein Anwendungsbereich nanozellulärer Schäume ist beispielsweise die thermische Isolation von Gebäuden, Rohrisolierungen und Kühlschränken. Hierbei kann man sich den Knudsen-Effekt zu Nutze machen. Liegen die Porengrößen der Schäume im Bereich der mittleren freien Weglänge der Gasmoleküle, sinkt die Wärmeleitfähigkeit deutlich. Für die thermische Isolation soll der Schaum vorzugsweise in großen Blöcken erzeugbar sein. Konventioneller Schaumkunststoff enthält typischerweise 10³ bis 10⁶ Blasen pro cm³. Es wäre wünschenswert, die Blasendichte auf über 10⁹ cm⁻³ anzuheben.

Zur Herstellung polymerer Schäume werden verschiedene Treibmittel eingesetzt. Hierbei werden die zu schäumenden Polymere, polymeren Fluide oder polymerisierbaren Mischungen mit Hilfe des Treibmittels aufgeschäumt. Dieses kann gasförmig sein oder eine leichtflüchtige Komponente, die durch die Reaktionswärme der Polymerisation oder durch Aufheizen verdampft wird.

Dabei wird das System übersättigt und es entsteht die Tendenz zur Gasblasenbildung. Das System ist in diesem Zustand weit von seinem thermodynamischen Gleichgewicht entfernt, zu dessen Erreichen ein Nukleationsschritt der Gasblasen notwendig ist. Dieser Prozess involviert sowohl für homogene als auch heterogene Nukleation eine Energiebarriere, die zur Bildung jeder individuellen Blase überwunden werden muss. Die entstehenden Schäume sind makrozellulär.

Die Herstellung von Mikroemulsionen ist bekannt. Dabei werden Wasser und Öl mithilfe eines Tensids in eine makroskopisch homogene, thermodynamisch stabile, nanostrukturierte Mischung gebracht. Durch die gezielte Wahl von Zusammensetzung, Druck und Temperatur können verschiedenste Strukturen eingestellt werden. So liegt in Öl-in-Wasser- (o/w) Mikroemulsionen das Öl in Form kleiner Öltröpfchen, die von einem Tensidfilm ummantelt sind, vor. Das Öl, in der Regel ein kondensierter langkettiger Kohlenwasserstoff, kann aber auch durch kurzkettige Kohlenwasserstoffe, wie Propan, oder durch CO₂ ersetzt werden.

Ein möglicher Ansatz, um einen Nanoschaum herzustellen, ist das POSME-Verfahren. Hierbei steht POSME für "Principle of Supercritical Microemulsion Expansion". Ausgangspunkt dieses Verfahrens bildet eine Mischung aus Wasser und Tensid bei Normaldruck, die mit einem Treibgas überschichtet ist. Die Tensidkonzentration in der hydrophilen Phase ist so gewählt, dass es zur Ausbildung von Mikroemulsionströpfchen kommt. Durch Druck- und Temperaturerhöhung über den kritischen Punkt des Gases (p > p_{c}; T > T_{c}), geht das Gas in einen überkritischen Zustand über. Erreicht das Gas hierbei eine ölähnliche Dichte, kann es durch Wechselwirkung mit den Tensidmolekülen in die Mikroemulsionströpfchen der Wasserphase eingelagert werden. Auf diese Weise kommt es zur Bildung einer Mikroemulsion mit überkritischem Fluid als Ölkomponente, welche mit einer Tröpfchendichte von 10¹⁶-10¹⁹ Tröpfchen pro Kubikzentimeter und einem Tröpfchenradius von ca. 5-50 nm eine geeignete Struktur aufweist. Wird diese nachfolgend bei konstanter Temperatur auf Normaldruck expandiert, so schwellen die Mikroemulsionströpfchen an und bilden einen Nanoschaum. Dieser lässt sich durch gleichzeitige oder vorherige Polymerisation der in der hydrophilen Phase befindlichen Monomere fixieren.

Durch den Einsatz eines Gases im überkritischen Zustand wird bei der isothermen Expansion kein zweiphasiges Gebiet passiert. Oberhalb des kritischen Punkts wird bei isothermer Expansion die Dichte kleiner, ohne dass ein Phasenübergang stattfindet. Dieser Vorgang ist für das POSME-Verfahren von großer Bedeutung, da der Übergang von einer flüssigkeits- zu einer gasähnlichen Dichte kontinuierlich entlang einer stetigen Isotherme erfolgt. Auf diese Weise kommt es zu einem gleichmäßigen Anschwellen der Mikroemulsionströpfchen, wodurch ein hoher Erhalt der Mikrostruktur der Mikroemulsion gewährleistet wird. Unterhalb der kritischen Temperatur würde es bei einer isothermen Expansion zur Keimbildung des Gases kommen müssen. Hierbei wird ein Zweiphasengebiet durchlaufen, in welchem Gas und Flüssigkeit miteinander koexistieren. Bei der Expansion unterhalb der kritischen Temperatur würde so ein sprunghafter Anstieg der Dichte erfolgen und damit die Schaumstruktur eventuell zerstören.

Das POSME-Verfahren wird in DE 102 60 815 A1 beschrieben. Diese Patentanmeldung offenbart aufgeschäumtes Material und ein Herstellverfahren für das aufgeschäumte Material. Aufgeschäumtes Material mit Schaumblasen in Nanogröße soll erzeugt werden, ohne dass die Energiebarriere, die üblicherweise bei Phasenumwandlungen und Keimbildungsprozessen auftritt, überwunden werden muss. Verbunden damit ist das Ziel, ein aufgeschäumtes Material kontrollierbar zu erzeugen, welches eine Anzahldichte von Schaumblasen zwischen 10¹² und 10¹⁸ pro cm³ sowie einen mittleren Durchmesser der Schaumblasen zwischen 10 nm und 10 µm hat. Grundlage ist die Dispersion eines zweiten Fluids in Form von Pools in einer Matrix eines ersten Fluids. In einem Reaktionsraum liegen das erste Fluid als Matrix und das zweite Fluid in Pools vor. Durch Druck- und/oder Temperaturänderung wird das zweite Fluid in einen nahe- oder überkritischen Zustand mit einer flüssigkeitsnahen Dichte überführt. Somit liegt das zweite Fluid vollständig oder nahezu vollständig in Pools vor, die im gesamten ersten Fluid gleichmäßig verteilt sind. Durch Druckentlastung kehrt das zweite Fluid in einen Zustand gasförmiger Dichte zurück, wobei die Pools zu Schaumblasen in Nanometer-Größe aufgebläht werden. Es muss keine Energiebarriere überwunden werden, noch müssen die Treibmittelmoleküle zu den wachsenden Blasen diffundieren.

Als erstes Fluid wird hier allgemein eine polymerisierbare Substanz vorgeschlagen. Ausdrücklich erwähnt werden jedoch nur Acrylamid, welches zu Polyacrylamid polymerisiert, und Melamin, welches zu Melamin-Harz polymerisiert. Das zweite Fluid sollte aus einer Stoffgruppe von Kohlenwasserstoffen wie Methan öder Ethan, weiterhin Alkanolen, Fluorchlorkohlenwasserstoffen oder CO₂ ausgewählt sein. Weiterhin wird ein amphiphiles Material eingesetzt, welches mindestens einen dem ersten Fluid zugeneigten Block und mindestens einen dem zweiten Fluid zugeneigten Block aufweisen sollte.

In der Regel sind die Details von Nukleationsvorgängen in technischen Anwendungen wenig bekannt und schwer kontrollierbar. Bei Veränderungen kann es zu einer starken Variabilität des Produktes hinsichtlich der Homogenität und Eigenschaften des Schaumes kommen. Durch Zugabe von Partikeln oder dem Einbringen von Luftblasen wird versucht Nukleation zu initiieren, jedoch können damit keine sehr hohen Anzahldichten an Blasen erreicht werden. Hinzu kommt, dass die heterogenen Partikel im Endprodukt verbleiben.

Durch den Einsatz eines gasförmigen oder eines überkritischen Treibmittels kann es zu sprunghaftem Blasenwachstum kommen, was zu großen Porendurchmessern und Lunkern führt. Bei der Herstellung von Schäumen können Alterungsprozesse auftreten, welche zu einer Vergröberung der Schaumstruktur führen. Durch isotherme Expansion schwellen die mit einem überkritischem Fluid geschwollenen Emulsionströpfchen an, wodurch sowohl das Volumen, als auch die Oberfläche der Emulsionströpfchen zunimmt. Da hierbei jedoch die Fläche des die Mikroemulsionströpfchen benetzenden Tensidfilms konstant bleibt, reißt der Tensidfilm während der Expansion auf und es werden Bereiche gebildet, an denen ein energetisch ungünstiger Kontakt zwischen dem zunächst überkritischen Fluid, dann aber zunehmend gasförmigem Treibmittel, und Wasser entsteht. Dies hat einen drastischen Anstieg der Grenzflächenspannung zu Folge.

Die Grenzflächenspannung beschreibt die Kraft, die zwischen zwei miteinander in Kontakt stehenden Phasen wirkt. Sie entspricht der Arbeit, die aufgewendet werden muss, um die Grenzfläche A um einen bestimmten Betrag zu verändern. Bei konstantem Volumen und konstanter Temperatur kann die Arbeit, die für die Bildung zusätzlicher Grenzfläche investiert werden muss, gleich der Änderung der freien Energie F des Systems gesetzt werden: d*F* = σ d*A*.

Da die Grenzflächenspannung stets positiv ist und die freie Energie dF abnimmt (d*F* < 0), wenn die Grenzfläche reduziert wird (d*A* < 0), hat diese eine natürliche Tendenz, sich zu verkleinern. Die Grenzflächenspannung zwischen Öl und Wasser liegt im Bereich von σ = 50 mNm⁻¹, kann aber durch Adsorption von Tensidmolekülen an der Grenzfläche auf bis zu σ = 10⁻⁴ mNm⁻¹ erniedrigt werden. Durch einen Riss im Tensidfilm kehrt die Grenzflächenspannung auf ihren ursprünglichen höheren Wert zurück. Durch Alterungsprozesse versucht das System nun seine Grenzfläche und somit seine Energie zu minimieren.

Eine Möglichkeit der Alterung besteht in der Koagulation mit anschließender Koaleszenz. Der Prozess der Koagulation besteht in der Zusammenballung einzelner dispergierter Schaumblasen, während jede dieser Blasen ihre Identität beibehält. Koagulation ist damit der einleitende Schritt, der zu weiteren Alterungsprozessen führt. Wenn sich zwei Schaumblasen auf solche Weise zusammenlagern, kommt es zur Koaleszenz, dem Zusammenfließen zweier kleiner Blasen zu einer großen Schaumblase. Im Falle der Koagulation und Koaleszenz von Schaumblasen ist es diesen möglich bei gleichbleibendem Volumen ihre Grenzfläche und somit ihre Energie zu minimieren.

Eine weitere Alterungsmöglichkeit neben der Koaleszenz besteht durch Ostwald-Reifung. Hier diffundieren Gasmoleküle von einer Schaumblase zu einer anderen. Dieses ist ein dynamischer Prozess, bei dem beide Blasen Moleküle miteinander austauschen. Im Falle von Schaumblasen mit unterschiedlichen Radien *R* ist jedoch die molekulare Diffusion von der kleinen zur großen Schaumblase aufgrund eines höheren Laplace-Drucks Δ*p* = |*p*ᵢₙₙₑₙ - *p*_{außen}| = 2σ/*R* im Blaseninneren energetisch begünstigt. Durch Moleküldiffusion kommt es so zu einem stetigen Anwachsen der größeren Schaumblasen auf Kosten der kleineren.

Die vorliegende Erfindung hat sich daher die Aufgabe gestellt, ein technisch praktikables Verfahren bereitzustellen, mit dem ein nanozellulärer Schaum erzeugt werden kann, bei dem die oben genannten Probleme der Alterungsprozesse nicht oder nicht mehr in einem signifikanten Umfang auftreten.

Erfindungsgemäß wird die Aufgabe gelöst durch ein Verfahren zur Herstellung eines geschäumten Materials, umfassend die Schritte:
- Bereitstellen einer emulsionsförmigen Zusammensetzung, umfassend:
   A) eine matrixbildende Komponente, wobei die gebildete Matrix bei Raumtemperatur fest ist,
   B) eine Tensidkomponente, welche die Emulgierung der Treibmittelkomponente C) samt Co-Komponente D) in der Matrixkomponente A) vermittelt, und
   C) eine in der Komponente A) emulgierte Treibmittelkomponente, welche überkritisches oder nahekritisches CO₂ umfasst; und
- Überführen des CO₂ der Treibmittelkomponente C) in den unterkritischen Zustand durch Druckerniedrigung;
wobei sich das Verfahren dadurch auszeichnet, dass die Treibmittelkomponente C) weiterhin eine hydrophobe Co-Komponente D) umfasst, welche in überkritischem CO₂ bei einem Druck von ≥ 150 bar löslich ist, in unterkritischem CO₂ bei einem Druck von ≤ 40 bar nicht löslich ist und in der Komponente A) nicht löslich ist und weiterhin die Co-Komponente D) in einem Anteil von ≥ 3 Gewichts-% bis ≤ 35 Gewichts-% der Treibmittelkomponente vorliegt.

Ohne auf eine Theorie festgelegt zu sein, wird angenommen dass die emulsionsförmige Zusammensetzung in Form von Mikroemulsionen vorliegen kann. Diese Mikroemulsionen umfassen als unpolare Komponente ein System aus Treibmittel und Co-Komponente (ohne hierauf beschränkt zu sein auch als "Öl" bezeichnet") bei der sogenannten kritischen Zusammensetzung. Das Öl hat die Tendenz, sich aufgrund seiner Hydrophobie im Treibmittel anzureichern. Die Konzentration entspricht hierbei der kritischen oder nahekritischen Zusammensetzung, die sich während der Entspannung spinodal entmischt und damit die Grenzflächenspannung in der Subphase herabsetzt.

Das Öl erfüllt in der zuvor beschriebenen Gas-Mikroemulsion während der Expansion im entstehenden Schaum eine Stabilisierungsfunktion, ist also ein "anti-aging-agent" (AAA). Mit der Druckerniedrigung schwellen die Mikroemulsionströpfchen der Mikroemulsion an, wodurch sich ihre Oberfläche stark vergrößert. Der Tensidfilm reicht nicht mehr aus, um die Grenzfläche abzudecken, wodurch in einer unstabilisierten Mikroemulsion eine neue Grenzfläche zwischen Gas und Flüssigkeit entsteht.

Weiterhin werden hier durch die sinkende Dichte des Gases seine Wechselwirkungen mit den Tensiden schwächer und die Grenzflächenspannung nimmt in Folge dessen zu. Um den Anstieg der Freien Energie durch die zunehmende Grenzflächenspannung wieder zu verringern, treten die oben erwähnten Alterungsprozesse auf. Löst man jedoch erfindungsgemäß in der Gas-Subphase das anti-aging-agent, schlägt dieses sich bei der Expansion an der Innenwand des Mikroemulsionströpfchens nieder. Die Phasentrennung mit dem Treibmittel innerhalb der Mikroemulsionströpfchen läuft dabei kontrolliert durch die spinodale Entmischung und ohne Energiebarriere ab.

Der stabilisierende Effekt besteht hier in der Erniedrigung der Grenzflächenspannung, da ein direkter Kontakt zwischen überkritischem Fluid bzw. Gas und polarer Phase verhindert wird. Das anti-aging-agent besitzt eine höhere Dichte als das Gas und kann dadurch besser mit der hydrophoben Gruppe des Tensids wechselwirken.

Die Grenzflächenspannung ist an dieser Stelle der einer Mikroemulsion sehr ähnlich. Auf der anderen Seite entsteht eine Grenzfläche zwischen Gas und anti-aging-agent. Da sich das System jedoch in einem nahekritischen Zustand befindet, ist auch hier die Grenzflächenspannung gering.

Vereinfacht ausgedrückt beinhaltet die Erfindung die Expansion vorformulierter kleiner Tröpfchen einer Mischung aus überkritischem Fluid und hydrophobem Additiv kritischer Zusammensetzung in einer hydrophilen Matrix. Die Anzahldichte der Tröpfchen ist über weite Bereiche durch die wohlbekannte, adjustierbaren Parameter von Mikroemulsionen frei wählbar.

Dadurch, dass sich die Mischung kritischer Zusammensetzung spinodal entmischt, findet kein Nukleationsschritt statt und das Mikroemulsionströpfchen wird kontinuierlich größer. Der Parameter Druck, der sich räumlich instantan ausbreitet und die gleichförmige Zusammensetzung der Mikroemulsion ermöglichen in Kombination die Herstellung von Bulkmaterialien mit räumlich homogener Blasenverteilung.

Es können geringe Drücke und Druckdifferenzen aufgewendet werden und die Blasen entstehen durch kontinuierliche, kontrollierbare Expansion. Die Druckabsenkung kann gezielt erfolgen. Der Parameter Temperatur ist, mit der Einschränkung, dass ihr Wert oberhalb der kritischen Temperatur des Treibmittels liegen muss, in weiten Bereichen frei wählbar. Durch die Wahl der Tenside/- gemische, der überkritischen Fluide/-gemische und des anti-aging-agents besteht große Flexibilität bei der Formulierung der aufzuschäumenden Mikroemulsion.

Im ersten Schritt des Verfahrens wird eine emulsionsförmige Zusammensetzung bereitgestellt. Hierbei ist nicht ausgeschlossen, dass auch feste Bestandteile wie zum Beispiel Füllstoffe anwesend sind. Die Treibmittelkomponente C) wird samt Co-Komponente D) in der Matrixkomponente A) unter Vermittlung der Tenside B) emulgiert. Das Bereitstellen kann beispielsweise in einem Mischkopf einer Hochdruck-Mischanlage geschehen.

Die matrixbildende Komponente A) sollte unter den Bedingungen des erfindungsgemäßen Verfahrens zunächst flüssig sein, damit das Treibmittel darin emulgiert werden kann. Durch Reaktion und/oder Abkühlung wird ein Material erhalten, welches bei Raumtemperatur (definiert als 20 °C) fest ist und somit für technische Anwendungen zu gebrauchen ist. Beispiele für solche Komponenten A) sind aufgeschmolzene thermoplastische Polymere und Reaktionsmischungen aus einem oder mehreren Monomeren, welche polymerisieren und dadurch den erhaltenen Schaum fixieren. Diese Komponente A) kann selbstverständlich weitere Hilfs- und Zusatzstoffe enthalten.

Die Tensidkomponente B) kann ein einzelnes Tensid oder eine Mischung verschiedener Tenside sein. Sie sollte vorzugsweise danach ausgewählt sein, dass die Bildung von Mikroemulsionen im betreffenden System zu erwarten ist. Dieses lässt sich durch Vorversuche ermitteln.

Ein weiterer Bestandteil der emulsionsförmigen. Zusammensetzung ist eine Treibmittelkomponente C). Diese umfasst nahekritische oder überkritisches Kohlendioxid. Vorzugsweise ist CO₂ das einzige Treibmittel. Das CO₂ kann extern hinzugefügt werden. Es ist aber auch möglich, dass das Kohlendioxid während der Reaktion zu einem Polyurethanschaum gebildet wird, beispielsweise durch die Reaktion von Isocyanaten mit Wasser oder mit Säuren.

Im Rahmen der vorliegenden Erfindung liegen nahekritische Bedingungen dann vor, wenn die folgende Bedingung erfüllt ist: (T_{c} - T)/T ≤ 0,4 (Temperatur in Kelvin) und/oder (p_{c} - p)/p ≤ 0,4. Hierbei bedeuten T die im Verfahren herrschende Temperatur, T_{c} die kritische Temperatur des CO₂ (31 °C), p der im Verfahren herrschende Druck und p_{c} der kritische Druck für das CO₂ (73,7 bar). Vorzugsweise liegen nahekritische Bedingungen vor, wenn gilt: (T_{c} - T)/T ≤ 0,3 und/oder (p_{c} - p)/p ≤ 0,3 und besonders bevorzugt (T_{c} - T)/T ≤ 0,2 und/oder (p_{c} - p)/p ≤ 0,2.

Das Treibmittel kann beispielsweise in einer Tröpfchengröße von > 1 nm bis ≤ 100 nm vorliegen. Die Tröpfchengröße kann auch ≥ 3 nm bis ≤ 30 nm betragen. Sie kann beispielsweise mittels dynamischer Lichtstreuung oder Neutronenkleinwinkelstreuung bestimmt werden und ist als Mittelwert der Tröpfchengrößen zu verstehen. Solche Tröpfchengrößen werden insbesondere erreicht, wenn die erfindungsgemäße Reaktionsmischung als Mikroemulsion vorliegt. Eine geringe Tröpfchengröße ist vorteilhaft, da sie bei einer Weiterverarbeitung der Zusammensetzung zu Polymerschäumen eine kleine Zellgröße im erhaltenen Schaum bewirkt.

Ein weiterer Schritt im erfindungsgemäßen Verfahren ist das Überführen des CO₂ der Treibmittelkomponente C) in den unterkritischen Zustand durch Druckerniedrigung. Es ist sehr bevorzugt, dass dieses durch Druckerniedrigung oberhalb der kritischen Temperatur des CO₂ geschieht.

Erfindungsgemäß ist vorgesehen, dass die Treibmittelkomponente C) weiterhin eine hydrophobe Co-Komponente D) umfasst. Die Co-Komponente kann eine Verbindung oder ein Gemisch von verschiedenen Verbindungen sein. Beispiele sind langkettige Alkane, Aromaten, Polysiloxane ("Silikonöle") und langkettige organische Ether, Ester und Ketone.

"Hydrophob" wird hierbei so definiert, dass der Verteilungskoeffizient der Co-Komponente D) in einem n-Octanol/Wasser-System log K_{OW} unter Standardbedingungen ≥ 2, vorzugsweise ≥ 4, und besonders bevorzugt ≥ 5 ist.

Die Co-Komponente ist von der Tensidkomponente verschieden. Sie wirkt nicht als Tensid, wobei eine eventuelle Wirkung als Entschäumer dennoch erfindungsgemäß mit eingeschlossen ist. Insbesondere kann diese Eigenschaft so definiert werden, dass bei nichtionischen Co-Komponenten D) ihr HLB-Wert ≤ 1 und vorzugsweise 0 ist Der HLB-Wert (hydrophilic-lipophilic-balance) beschreibt den hydrophilen und lipophilen Anteil von hauptsächlich nichtionischen Tensiden. Der HLB-Wert für nichtionische Tenside kann folgendermaßen berechnet werden: HLB = 20 (1 - Mₕ/M), wobei Mₕ die Molmasse des hydrophoben Anteils eines Moleküls ist und M die Molmasse des gesamten Moleküls.

Weiterhin ist vorgesehen, dass die Co-Komponente D) in überkritischem CO₂ bei einem Druck von ≥ 150 bar löslich und in unterkritischem CO₂ bei einem Druck von ≤ 40 bar nicht löslich ist. Vorzugsweise ist sie in überkritischem CO₂ bei einem Druck von ≥ 140 bar löslich und in unterkritischem CO₂ bei einem Druck von ≤ 60 bar nicht löslich. Besonders bevorzugt ist sie in überkritischem CO₂ bei einem Druck von ≥ 120 bar löslich und in unterkritischem CO₂ bei einem Druck von ≤ 70 bar nicht löslich. "Löslich" und "nicht löslich" bedeutet hierbei, dass unter den erfindungsgemäß spezifizierten Gewichtsanteilen der Co-Komponente D) innerhalb der Treibmittelkomponente C) und insbesondere also innerhalb von CO₂ ein einphasiges oder zweiphasiges System erhalten würde.

Weiterhin bevorzugt ist die Co-Komponente D) nicht vollständig in der Komponente A) löslich oder nicht löslich, damit es sich nach der Entmischung an der Innenseite der Treibmittelemulsionströpfchen anlagern kann. "Löslich" und "nicht löslich" bedeutet hierbei, dass unter den erfindungsgemäß spezifizierten Gewichtsanteilen der Co-Komponente D) innerhalb der Komponente A) ein einphasiges oder zweiphasiges System erhalten werden würde.

Wird die matrixbildende Komponente A) durch eine Reaktion einer Reaktivmischung erhalten, so enthält das anti-aging-agent bevorzugt keine reaktiven Gruppen für die Reaktivmischung, da dies zu einer verbesserten Löslichkeit in der Reaktivmischung führen kann.

Vorzugsweise liegt die Co-Komponente D) in einem Anteil von ≥ 4 Gewichts-% bis ≤ 20 Gewichts-%, besonders bevorzugt in einem Anteil von ≥ 5 Gewichts-% bis ≤ 15 Gewichts-%, der Treibmittelkomponente vor, so dass eine Treibmittelkomponente mit ≥ 4 Gewichts-% bis ≤ 20 Gewichts-% D) und ≥ 80 Gewichts-% bis ≤ 96 Gewichts-% CO₂, besonders bevorzugt ≥ 85 Gewichts-% bis ≤ 95 Gewichts-% CO₂ vorliegt, wobei sich die Summe der Gewichtsanteile ≤ 100 Gewichts-% beträgt.

Beispielhaft können in der emulsionsförmigen Zusammensetzung die Komponenten A), B), C) und D) in den folgenden Mengenanteilen vorkommen, wobei sich die Angaben stets zu ≤ 100 Gewichts-% addieren:
A) ≥ 60 Gewichts-% bis ≤ 85 Gewichts-%, vorzugsweise ≥ 65 Gewichts-% bis < 85 Gewichts-%, mehr bevorzugt ≥ 70 Gewichts-% bis ≤ 80 Gewichts-%;
B) ≥ 4 Gewichts-% bis ≤ 30 Gewichts-%, vorzugsweise ≥ 6 Gewichts-% bis ≤ 20 Gewichts-%, mehr bevorzugt ≥ 8 Gewichts-% bis ≤ 16 Gewichts-%;
C) ≥ 5 Gewichts-% bis ≤ 30 Gewichts-%, vorzugsweise ≥ 8 8 Gewichts-% bis ≤ 20 Gewichts-%, mehr bevorzugt ≥ 10 Gewichts-% bis ≤ 15 Gewichts-%; und
D) ≥ 0,3 Gewichts-% bis ≤ 10 Gewichts-%, vorzugsweise ≥ 0,5 Gewichts-% bis ≤ 5 Gewichts-%, mehr bevorzugt ≥ 0,8 Gewichts-% bis ≤ 3 Gewichts-%.

Ausführungsformen des erfindungsgemäßen Verfahrens werden nachfolgend beschrieben, wobei die Ausführungsformen frei miteinander kombiniert werden können, sofern der Kontext nicht eindeutig dagegen spricht.

In einer Ausführungsform des erfindungsgemäßen Verfahrens umfasst die Komponente A) eine gegenüber Polyisocyanaten reaktive Verbindung und ein Polyisocyanat. Geeignete gegenüber Isocyanaten reaktive Verbindungen sind insbesondere Polyole, Polyamine, Polyaminoalkohole, und Polythiole.

Beispiele für Polyamine sind Ethylendiamin, 1,2- und 1,3-Diaminopropan, 1,4-Diaminobutan, 1,6-Diaminohexan, Isophorondiamin, ein Isomerengemisch von 2,2,4- und 2,4,4-Trimethylhexamethylendiamin, 2-Methylpentamethylendiamin, Diethylentriamin, 1,3- und 1,4-Xylylendiamin, α, α, α', α'-Tetramethyl-1,3- und -1,4-xylylendiamin und 4,4'-Diaminodicyclohexylmethan, Diethylmethylbenzoldiamin (DETDA), 4,4'-Diamino-3,3'-dichlordiphenylmethane (MOCA), Dimethylethylendiamin, 1,4-Bis(aminomethyl)cyclohexan, 4,4'-Diamino-3,3'-dimethyldicyclohexylmethan und 4,4'-Diamino-3,5-diethyl-3',5'-diisopropyldicyclohexylmethan. Weiterhin geeignet sind polymere Polyamine wie Polyoxyalkylenamine.

Beispiele für Aminoalkohole sind N-Aminoethylethanolamin, Ethanolamin, 3-Aminopropanol, Neopentanolamin und Diethanolamin.

Beispiele für Polythiole sind Di(2-mercaptoethyl)ether, Pentaerytlaritoltetrakisthioglycolat, Pentaerythritoltetrakis(3-inercaptopropionat) und 1,2-Bis((2-mercaptoetlayl)thio)-3-mercaptopropan.

Vorzugsweise ist das Polyol ausgewählt aus der Gruppe umfassend Polyetherpolyole, Polyesterpolyole, Polycarbonatpolyole, Polyetheresterpolyole, und/oder Polyacrylatpolyole und wobei weiterhin die OH-Zahl des Polyols ≥ 100 mg KOH/g bis < 800 mg KOH/g, besonders bevorzugt ≥ 350 mg KOH/g bis ≤ 650 mg KOH/g, und die durchschnittliche OH-Funktionalität der Polyole ≥ 2 beträgt.

Die erfindungsgemäß verwendbaren Polyole können beispielsweise ein zahlenmittleres Molekulargewicht Mₙ von ≥ 60 g/mol bis ≤ 8000 g/mol, bevorzugt von ≥ 90 g/mol bis ≤ 5000 g/mol und mehr bevorzugt von ≥ 92 g/mol bis ≤ 1000 g/mol aufweisen. Die OH-Zahl gibt im Falle eines einzelnen zugesetzten Polyols dessen OH-Zahl an. Im Falle von Mischungen wird die mittlere OH-Zahl angegeben. Dieser Wert kann anhand von DIN 53240 bestimmt werden. Die durchschnittliche OH-Funktionalität der genannten Polyole ist ≥ 2, beispielsweise in einem Bereich von ≥ 2 bis ≤ 6, vorzugsweise von ≥ 2,1 bis ≤ 4 und mehr bevorzugt von ≥ 2,2 bis ≤ 3.

Erfindungsgemäß verwendbare Polyetherpolyole sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxide und/oder Epichlorhydrins an di- oder polyfunktionelle Startermoleküle.

Geeignete Startermoleküle sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, 1,4-Butandiol, 1,6-Hexandiol, sowie niedermolekulare, Hydroxylgruppen aufweisende Ester derartiger Polyole mit Dicarbonsäuren.

Erfindungsgemäß verwendbare Polyesterpolyole sind unter Anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexaudiol(1,6) und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylendetrahydrophthalsäure, Dimerfettsäure, Trimerfettsäure, Zitronensäure, oder Trimellithsäure eingesetzt werden. Als Säurequelle können auch die entsprechenden Anhydride verwendet werden.

Sofern die mittlere Funktionalität des zu veresternden Polyols ≥ 2 ist, können zusätzlich auch Monocarbonsäuren wie Benzoesäure und Hexancarbonsäure mit verwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydröxycapronsäure, Hydroxybuttersäure, Hydroxydecansäure, Hydroxystearinsäure und dergleichen. Geeignete Lactone sind unter anderem Caprolacton, Butyrolacton und Homologe.

Erfindungsgemäß verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen, erhältlich.

Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art.

Statt oder zusätzlich zu reinen Polycarbonatdiolen können auch Polyether-Polycarbonatdiole eingesetzt werden.

Erfindungsgemäß verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit ≥ 4 bis ≤ 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Als Derivate dieser Säuren können beispielsweise deren Anhydride sowie deren Ester und Halbester mit niedermolekularen, monofunktionellen Alkoholen mit ≥ 1 bis ≤ 4 Kohlenstoffatomen eingesetzt werden.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller insbesondere trifunktioneller Startermoleküle enthalten. Polyetheresterpolyole können durch die Reaktion von Polycarbonsäureanhydriden mit Diolen und anschließende Alkoxylieren dieser erhaltenen Verbindungen erhalten werden.

Startermoleküle sind zum Beispiel Diole mit primären OH-Gruppen und zahlenmittleren Molekulargewichten Mₙ von vorzugsweise ≥ 18 g/mol bis ≤ 400 g/mol oder von ≥ 62 g/mol bis ≤ 200 g/mol wie 1,2-Ethandiol, 1,3-Propandiol, 1,4-Butandiol, 1,5-Pentendiol, 1,5-Pentandiol, Neopentylglykol, 1,6- Hexandiol, 1,7-Heptandiol, Octandiol-1,8, 1,10-Decandiol, 2-Methyl-1,3-propandiol, 2,2-Dimethyl-1,3-piopandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol.

Neben den Diolen können auch Polyole mit zahlenmittleren Funktionalitäten von > 2 bis ≤ 8, oder von ≥ 3 bis ≤ 4 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole mit mittleren Molekulargewichten von vorzugsweise ≥ 18 g/mol bis ≤ 400 g/mol oder von ≥ 62 g/mol bis ≤ 200 g/mol. Bevorzugt ist Glycerin.

Polyacrylatpolyole können durch radikalische Polymerisation von Hydroxylgruppen aufweisenden, olefinisch ungesättigte Monomeren oder durch radikalische Copolymersation von Hydroxylgruppen aufweisenden, olefinisch ungesättigten Monomeren mit gegebenenfalls anderen olefinisch ungesättigten Monomeren erhalten werden. Beispiele hierfür sind Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylsäure, Acrylnitril und/oder Methacrylnitril. Geeignete Hydroxylgruppen aufweisende, olefinisch ungesättigte Monomere sind insbesondere 2-Hydroxyethyl-acrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropyl-methacrylat-Isomerengemisch. Endständige Hydroxylgruppen können auch in geschützter Form vorliegen. Geeignete Radikalinitiatoren sind die aus der Gruppe der Azoverbindungen, wie zum Beispiel Azoisobutyronitril (AIBN), oder aus der Gruppe der Peroxide, wie beispielsweise Di-tert.-Butylperoxid.

Beispiele von geeigneten Polyisocyanaten sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'-und/oder 4,4'-Diphenylmethandiisocyanat (MDI) oder höhere Homologe (polymeres MDI, pMDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C₁ bis C₆-Alkylgruppen. Besonders bevorzugt ist eine Mischung aus MDI und pMDI.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Es ist möglich, dass in der Reaktionsmischung die Anzahl der NCO-Gruppen im Isocyanat und die Anzahl der gegenüber Isocyanaten reaktiven Gruppen in einem Zahlenverhältnis von ≥ 70:100 bis ≤ 500:100 zueinander stehen. Diese Kenngröße kann auch in einem Bereich von ≥ 180:100 bis ≤ 330:100 oder aber auch von ≥ 90:100 bis ≤ 140:100 liegen.

In einer weiteren Ausführungsform des erfindungsgemäßen Verfahrens umfasst die Komponente A) Acrylamid, Epoxide und/oder Phenol, Melamin und/oder Harnstoff-Formaldehyd. Hierbei können Polyacrylamid, Epoxy-Schäume-, Phenolharz-Schäume, Melaminharz-Schäume oder Harnstoff-Schäume erhalten werden.

In einer weiteren Ausführungsform des erfindungsgemäßen Verfahrens umfasst die Komponente A) Polystyrol, Polyvinylchlorid, Polyvinylacetat, Polyethylenterephthalat, Polymethylmethacrylat, thermoplastisches Polyurethan (TPU), Polypropylen, Polyethylen und/oder Copolymere aus Styrol, Butadien, Acrylnitril, Methylmethacrylat und/oder Vinylacetat wie beispielsweise AcrylnitrilButadien-Styrol (ABS), Styrolacrylnitril (SAN), Styrol-Butadien-Methacrylat (SBM), Ethylen-Vinylacetat (EVA) und/oder Blends dieser Polymere.

In einer weiteren Ausfülarungsform des erfindungsgemäßen Verfahrens ist die Tensidkomponente B) ausgewählt aus der Gruppe umfassend alkoxylierte Alkanole, alkoxylierte Alkylphenole, alkoxylierte Fettsäuren, Fettsäureester, Polyalkylenamine, Alkylsulfate, Alkylpolyether, Alkylpolyglucoside, Phosphatidylinositole, fluorierte Tenside, Polysiloxangruppen umfassende Tenside und/oder Bis(2-ethyl-1-hexyl)sulfosuccinat.

Als Tensidkomponente erfindungsgemäß verwendbare alkoxylierte Alkanole sind beispielsweise Ether von linearen oder verzweigten Alkanolen mit ≥ 10 bis ≤ 30 Kohlenstoffatomen mit Polyalkylenglykolen mit ≥ 2 bis ≤ 100 Alkylenoxideinheiten. Beispielsweise können es Ether von linearen Alkanolen mit ≥ 15 bis ≤ 20 Kohlenstoffatomen mit Polyalkylenglykolen mit ≥ 5 bis ≤ 30 Ethylenoxideinheiten sein.

Fluorierte Tenside können perfluoriert oder teilfluoriert sein. Beispiele hierfür sind teilfluorierte ethoxylierte Alkanole oder Carbonsäuren wie Perfluoroctansäure.

Ein Polysiloxangruppen umfassendes Tensid kann beispielsweise ein siloxanterminierter Polyalkylenoxid-Polyether sein. Diese Tenside können linear oder verzweigt aufgebaut sein. Solch ein erfindungsgemäß einzusetzendes Tensid kann beispielsweise durch die Hydrosilylierung einer ungesättigten Verbindung mit einem Polysiloxan, das Si-H Gruppen trägt, erhalten werden. Die ungesättigte Verbindung kann unter anderem das Reaktionsprodukt von Allylalkohol mit Ethylenoxid oder Propylenoxid sein.

Beispielsweise kann das Tensid auch durch die Reaktion von Polyetheralkoholen mit einem Polysiloxan, das Si-Cl Gruppen trägt, erhalten werden. In dem Polyether können sämtliche Endgruppen siloxanterminiert sein. Es ist auch möglich, dass gemischte Endgruppen vorliegen, dass also Siloxanendgruppen und OH-Endgruppen oder durch Reaktion funktionalisierte OH-Endgruppen wie Methoxygruppen vorliegen. Der Siloxanterminus kann eine Monosiloxangruppe R₃Si-O- oder eine Oligo- oder Polysiloxangruppe R₃-Si-O-[R₂Si-O]ₙ-[AO] mit beispielsweise n ≥ 1 bis ≤ 100 sein. Im Fall von verzweigten Tensiden kann der Siloxanterminus auch gemäß R₃Si-O-RSi[AO]-O-[R₂Si-O]ₘ-O-SiR₃ aufgebaut sein mit beispielsweise m ≥ 0 bis ≤ 10 oder als Kammpolymer gemäß R₃Si-O-[RSi[AO]]ₙ-O-[R₂Si-O]ₘ-O-SiR₃ mit m+n ≥ 0 bis ≤ 250 aufgebaut sein. Vorzugsweise ist in den genannten Fällen der Rest R eine Alkylgruppe, insbesondere eine Methylgruppe. Die Gruppe [AO] steht für einen Polyalkylenoxidrest, vorzugsweise Polyethylenoxid und/oder Polypropylenoxid. Die Gruppe [AO] kann auch über eine Verbindungsgruppe wie zum Beispiel C₃H₆ an das Siloxan angebunden werden.

In einer weiteren Ausführungsform des erfindungsgemäßen Verfahrens ist die Co-Komponente D) ausgewählt aus der Gruppe umfassend Alkane, Alkene, Aromaten, Ester, Ether, Ketone mit ≥ 7 bis ≤ 20 C-Atomen, bevorzugt ≥ 8 bis ≤ 18 C-Atome, besouders bevorzugt ≥ 10 bis ≤ 16 C-Atome, und/oder lineare, verzweigte oder cyclische Polysiloxane mit ≥ 3 bis ≤ 20 Si-Atomen, bevorzugt ≥ 4 bis ≤ 12 Si-Atomen, besonders bevorzugt ≥ 5 bis ≤ 8 Si-Atomen.

Beispiele für Ester sind die Kondensationsprodukte aus Mono-, Di-, Tri- und Tetracarbonsonsäuren mit Monoolen, Diolen und Triolen. Bevorzugt sind Monole und Monocarbonsäuren. Monoole können beispielsweise Methanol, Ethanol, Propanol, Butanol, Pentanol, Hexanol, Heptanol, Octanol, Nonanol, Decanol, Undecanol, Dodecanol, Tridecanol, Tetradecanol, Pentadecanol, Hexadecanol, Heptadecanol oder Octadecanol sein.

Beispiele für Diole können Ethylenglykol, 1,2- und 1,3-Propandiol, 1,3- und 1 ,4-Butandiol, 1,6-Hexandiol, 1,8-Octandiol, Neopentylglykol, 2-Methyl-1,3-propandiol, 2,2,4-Trimethylpentandiol-1,3, Dipropylenglykol sein.

Beispiele für Monocarbonsäuren können Ameisensäure, Essigsäure, Propionsäure, Buttersäure, Pentansäure, Hexansäure, Heptansäure, Octansäure, Nonansäure, Decansäure, Undecansäure, Dodekansäure, Tridekansäure, Tetradecansäure, Pentadecansäure, Hexadecansäure, Heptadecansäure, Octadecansäure sein.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure eingesetzt werden. Bevorzugt sind Fettsäuren.

Beispiele für geeignete Aromaten sind alkylierte Benzolderivate.

Beispiele für geeignete Alkene sind solche der allgemeinen Strukturformel [R-CH=CH-R'], wobei R und R' organische Reste sind, bevorzugt Alkyl- oder Phenylgruppen.

Beispiele für geeignete Ether sind solche der allgemeinen Strukturformel [R-O-R'], wobei R und R' organische Reste sind, bevorzugt Alkyl- oder Phenylgruppen. Ether können auch die Reaktionsprodukte von Diolen, Triolen und Tetraolen mit Monoolen sein.

Beispiele für geeignete Ketone sind solche der allgemeinen Strukturformel [R-(C=O)-R'], wobei R und R' organische Reste sind, bevorzugt Alkyl- oder Phenylgruppen.

Beispiele für geeignete Polysiloxane sind solche der allgemeinen Strukturformel [RR'Si-O]ₙ, wobei R und R' organische Reste sind, bevorzugt Methyl- oder Phenylgruppen.

Bevorzugt sind *n*-Decan, *n*-Dodecan, *n*-Tetradecan, *n*-Hexadecan, Methylester von Fettsäuren wie Methyldecanoat, Methyldodecanoat, Methyltetradecanoat, Methylhexadecanoat sowie cyclische Siloxane wie Hexamethylcyclotrisiloxan ("D3"), Octamethylcyclotetrasiloxan ("D4"), Decamethylcyclopentasiloxan ("D5") und Dodecamethylcyclohexasiloxan ("D6")., oder lineare Siloxane wie Octamethyltrisiloxan ("MDM"), Decamethyltetrasiloxan ("MD2M"), Dodecamethylpentasiloxan ("MD3M"), Tetradecamethylhexasiloxan ("MD4M") und Hexadecamethylheptasiloxan ("MD5M") und verzweigte Siloxane wie Phenyltris(trimethylsiloxy)silan.

Bevorzugt enthält diese Co-Komponente D) keine gegenüber Isocyanaten reaktive Gruppen.

In einer weiteren Ausführungsform des erfindungsgemäßen Verfahrens wird die emulsionsförmige Zusammensetzung bei einem Druck von ≥ 50 bar bis ≤ 200 bar, bevorzugt ≥ 70 bar bis ≤ 120 bar, besonders bevorzugt ≥ 80 bar bis ≤ 100 bar, und einer Temperatur von ≥ 20 °C bis ≤ 80 °C, bevorzugt ≥ 30 °C bis ≤ 70 °C, bereitgestellt.

In einer weiteren Ausführungsform des erfindungsgemäßen Verfahrens findet das Überführen des CO₂ der Treibmittelkomponente C) in den unterkritischen Zustand in einer geschlossenen Form statt, wobei die geschlossene Form nicht Teil eines Mischkopfs einer Mischanlage ist und so eingerichtet ist, dass deren inneres Volumen und/oder der in ihrem Inneren herrschende Druck nach dem Einbringen der Mischung durch externe Beeinflussung verändert werden kann.

Dass die geschlossene Form nicht der Mischkopf einer Mischanlage ist, bedeutet insbesondere, dass hierunter nicht eine Mischkammer oder ein an einem Ende verschließbarer Auslauf eines Mischkopfs gemeint ist.

Vorzugsweise unter Beibehaltung der überkritischen oder nahekritischen Bedingungen für das Treibmittel wird die emulsionsförmige Zusammensetzung in eine geschlossene Form eingebracht. Die Treibmittelkomponente C) liegt dann beim und nach dem Einbringen im überkritischen oder nahekritischen Zustand vor. Eine geschlossene Form ist hierbei insbesondere als eine Form zu verstehen, in der ein Überdruck gegenüber dem Atmosphärendruck aufgebaut werden kann. Im einfachsten Fall wird über eine gasdichte Einfüllöffnung die Reaktionsmischung in die Form eingebracht. Durch die geschlossene Form wird verhindert, dass zu früh wieder unterkritische Bedingungen für das Treibmittel herrschen.

Die Form ist so eingerichtet, dass deren inneres Volumen und/oder der in ihrem Inneren herrschende Druck nach dem Einbringen der emulsionsförmigen Zusammensetzung durch externe Beeinflussung verändert werden kann. Dieses bedeutet, dass nicht nur das Eintragen der Zusammensetzung und eine sich anschließende Reaktion zu einem Schaum das innere Volumen und den Druck der Form verändern. Vielmehr weist die Form noch weitere Möglichkeiten auf, um dieses extern und somit auch kontrolliert zu bewerkstelligen.

In der Form kann ein Gegendruck aufgebaut werden, wenn die Zusammensetzung eingebracht wird und dieser Gegendruck kann aufrechterhalten werden, solange die Mischung für die vorbestimmte Zeitdauer in der Form verbleibt. Durch den Gegendruck lässt sich Einfluss auf die Expansion des Treibmittels und somit auf die Zellengröße nehmen. Es ist möglich, dass der Gegendruck oberhalb des kritischen Druckes für das benutzte Treibmittel liegt. So kann der Gegendruck beispielsweise ≥ 40 bar bis ≤ 150 bar oder ≥ 70 bar bis ≤ 120 bar betragen. Es ist ebenfalls möglich, dass in der Form Temperaturen oberhalb der kritischen Temperatur des Treibmittels herrschen. Dieses kann durch eine externe Heizung erreicht werden. Solche Temperaturen können jedoch auch durch die Reaktionswärme einer Polyurethanbildung ohne weiteres Zutun erreicht werden. Die Bereitstellung der Komponenten kann durch eine Polyurethan-Hochdruckanlage erfolgen.

Nach dem Einbringen der Zusammensetzung in die Form verweilt diese für eine vorbestimmte Zeitdauer von ≥ 0 Sekunden. Auch beim Verweilen der Zusammensetzung in der Form wird vorzugsweise ein erhöhter Druck aufrechterhalten. Es ist möglich, dass der Gegendruck oberhalb des kritischen Druckes für das Treibmittel liegt oder dass nahekritische Bedingungen herrschen. So kann der Gegendruck beispielsweise ≥ 40 bar bis ≤ 150 bar oder ≥ 70 bar bis ≤ 120 bar betragen. Es ist ebenfalls möglich, dass während des Verweilens in der Form Temperaturen oberhalb der kritischen Temperatur des jeweiligen Treibmittels herrschen oder dass nahekritische Verhältnisse vorliegen. Vorzugsweise findet das Verweilen für ≥ 1 Sekunde bis ≤ 20 Minuten statt. Die Verweildauer kann auch ≥ 1 Minute bits ≤ 12 Minuten betragen. Während der Verweilzeit vernetzt der erhaltene Schaum, ohne dass eine Expansion von Gasbläschen im Schaum die Zellengröße ungewollt erhöhen würde.

Danach kann durch externe Beeinflussung eine Druckabsenkung beziehungsweise Volumenvergrößerung in der geschlossenen Form erfolgen. Im einfachsten Fall beinhaltet dieses das Öffnen der Form. Je nach Verweildauer und Reaktionsfortschritt ist es auch möglich, dass eine langsame, kontrollierte Druckabsenkung die Zellenbildung im Schaum steuert.

In einer weiteren Ausführungsform des erfindungsgemäßen Verfahrens weisen in der emulsionsförmigen Zusammensetzung die Komponenten die folgenden Anteile auf, wobei die Summe der Gewichtsanteile ≤ 100 Gewichts-% beträgt:
A) ≥ 60 Gewichts-% bis ≤ 85 Gewichts-%, vorzugsweise ≥ 65 Gewichts-% bis ≤ 85 Gewichts-%, mehr bevorzugt ≥ 70 Gewichts-% bis ≤ 80 Gewichts-% einer Reaktionsharzmischung aus MDI und/oder pMDI mit Polyolen, die eine mittlere Hydroxylzahl von ≥ 250 mg KOH/g haben;
B) ≥ 4 Gewichts-% bis ≤ 30 Gewichts-%, vorzugsweise ≥ 6 Gewichts-% bis ≤ 20 Gewichts-%, mehr bevorzugt ≥ 8 Gewichts-% bis ≤ 16 Gewichts-% eines Polysiloxangruppen umfassendes Tensids;
C) ≥ 5 Gewichts-% bis ≤ 30 Gewichts-%, vorzugsweise ≥ 8 Gewichts-% bis ≤ 20 Gewichts-%, mehr bevorzugt ≥ 10 Gewichts-% bis ≤ 15 Gewichts-% CO₂; und
D) ≥ 0,3 Gewichts-% bis ≤ 10 Gewichts-%, vorzugsweise ≥ 0,5 Gewichts-% bis ≤ 5 Gewichts-%, mehr bevorzugt ≥ 0,8 Gewichts-% bis ≤ 3 Gewichts-% Dodekan.

Die Hydroxylzahl der Polyole wird hierbei gemäß DIN 53240 bestimmt.

Ein weiterer Gegenstand der vorliegenden Erfindung ist eine emulsionsförmige Zusammensetzung, geeignet zur Herstellung eines geschäumten Materials, umfassend:
A) eine matrixbildende Komponente, wobei die gebildete Matrix bei Raumtemperatur fest ist,
B) eine Tensidkomponente und
C) eine in der Komponente A) emulgierte Treibmittelkomponente, welche überkritisches oder nahekritisches CO₂ umfasst;
wobei diese sich dadurch auszeichnet, dass die Treibmittelkomponente C) weiterhin eine hydrophobe Co-Komponente D) umfasst, welche in überkritischem CO₂ bei einem Druck von ≥ 150 bar löslich ist, in unterkritischem CO₂ bei einem Druck von ≤ 40 bar nicht löslich ist und in der Komponente A) nicht löslich ist und weiterhin die Co-Komponente D) in einem Anteil von ≥ 3 Gewichts-% bis ≤ 35 Gewichts-% der Treibmittelkomponente vorliegt.

Details bezüglich der einzelnen Komponenten wurden bereits im Zusammenhang mit dem erfindungsgemäßen Verfahren beschrieben, so dass zur Vermeidung von Wiederholungen hierauf verwiesen wird.

Die vorliegende Erfindung betrifft ebenfalls ein geschäumtes Material, erhältlich durch ein erfindungsgemäßes Verfahren, umfassend eine feste Matrix und in der Matrix verteilte Gasblasen, wobei dieses sich dadurch auszeichnet, dass die Grenzfläche zwischen Matrix und Gasblase auf der dem Inneren der Gasblase zugewandten Seite eine hydrophobe Co-Komponente D) angeordnet ist, welche in überkritischem CO₂ bei einem Druck von ≥ 150 bar löslich ist, in unterkritischem CO₂ bei einem Druck von ≤ 40 bar nicht löslich ist und in der Komponente A) nicht löslich ist.

Details insbesondere bezüglich der Komponente D) wurden bereits im Zusammenhang mit dem erfindungsgemäßen Verfahren beschrieben, so dass zur Vermeidung von Wiederholungen hierauf verwiesen wird.

Vorzugsweise hat der Schaum einen mittleren Porendurchmesser von ≥ 10 nm bis ≤ 10000 nm. Der Porendurchmesser kann auch ≥ 20 nm bis ≤ 1000 nm und ≥ 40 nm bis ≤ 800 mm betragen. Vorzugsweise wird der Porendurchmesser mittels Elektronenmikroskopie und Vermessen der Poren bestimmt. Alternative Verfahren sind die Bestimmung durch Quecksilberintrusion (DIN 66133) und Stickstoffsorption (DIN 66134).

Weiterhin bevorzugt weist der Schaum eine Porendichte von ≥ 10⁷ Poren/cm³ bis ≤ 10¹⁸ Poren/cm³ auf. Die Porendichte wird mittels Elektronenmikroskopie bestimmt. Dabei wird auf einer repräsentativen Querschnittsfläche des Schaumes die Anzahl der Poren pro Flächeneinheit bestimmt und auf das Volumen hochgerechnet. Die Porendichte kann auch in einem Bereich von ≥ 10⁹ Poren/cm³ bis ≤ 10¹⁶ Poren/cm³ und vorzugsweise ≥ 10¹² Poren/cm³ bis ≤ 10¹⁴ Poren/cm³ liegen. Weiterhin bevorzugt weist der Schaum eine Rohdichte von ≥ 10 kg/m³ bis ≤ 300 kg/m³ auf. Die Rohdichte kann auch in einem Bereich von ≥ 20 kg/m³ bis ≤ 200 kg/m³ und vorzugsweise von ≥ 25 kg/m³ bis ≤ 120 kg/m³ liegen.

Weiterhin bevorzugt weist der Schaum eine Wärmeleitfähigkeit von ≥ 6 mW/m K bis ≤ 30 mW/m K auf. Diese kann mittels DIN 52616 bestimmt werden und auch in einem Bereich von ≥ 8 mW/m K bis ≤ 25 mW/m K und vorzugsweise ≥ 10 mW/m K bis ≤ 20 mW/m K liegen.

In einer Ausführungsform des erfindungsgemäßen geschäumten Materials umfasst die feste Matrix ein Polyurethanpolymer. Mit eingeschlossen in diesen Begriff sind PIR- und PUR/PIR-Polymere. Auch hier wird auf die Ausführungen zum erfindungsgemäßen Verfahren verwiesen.

In einer weiteren Ausführungsform des erfindungsgemäßen geschäumten Materials ist das Material aus einer emulsionsförmigen Zusammensetzung mit Komponenten in den folgenden Anteilen erhältlich, wobei die Summe der Gewichtsanteile ≤ 100 Gewichts-% beträgt:
A) ≥ 60 Gewichts-% bis ≤ 95 Gewichts-%, vorzugsweise ≥ 65 Gewichts-% bis ≤ 85 Gewichts-%, mehr bevorzugt ≥ 70 Gewichts-% bis ≤ 80 Gewichts-% einer Reaktionsharzmischung aus MDI und/oder pMDI mit Polyolen, die eine mittlere Hydroxylzahl von ≥ 250 mg KOH/g haben;
B) ≥ 4 Gewichts-% bis ≤ 30 Gewichts-%, vorzugsweise ≥ 6 Gewichts-% bis ≤ 20 Gewichts-%, mehr bevorzugt ≥ 8 Gewichts-% bis ≤ 16 Gewichts-% eines Polysiloxangruppen umfassendes Tensids;
C) ≥ 5 Gewichts-% bis ≤ 30 Gewichts-%, vorzugsweise ≥ 8 Gewichts-% bis ≤ 20 Gewichts-%, mehr bevorzugt ≥ 10 Gewichts-% bis ≤ 15 Gewichts-%CO₂; und
D) ≥ 0,3 Gewichts-% bis ≤ 10 Gewichts-%, vorzugsweise ≥ 0,5 Gewichts-% bis ≤ 5 Gewichts-%, mehr bevorzugt ≥ 0,8 Gewichts-% bis ≤ 3 Gewichts-% Dodekan;

In einer weiteren Ausführungsform des erfindungsgemäßen geschäumten Materials liegt die Porendichte im Bereich von ≥ 10⁷ Poren/cm³.

Die vorliegende Erfindung wird anhand der nachfolgenden Figuren und Beispiele näher erläutert, ohne jedoch darauf beschränkt zu sein. Es zeigen:
- FIG. 1: ein druckabhängiges Phasendiagramm eines binären Systems
- FIG. 2: ein druckabhängiges Phasendiagramm des Systems *n*-Decan/CO₂
- FIG. 3: ein druckabhängiges Phasendiagramm des Systems Octamethylcyclotetrasiloxan/CO₂
- FIG. 4: das Phasenverhalten von *n*-Dodecanhaltigen Systemen
- FIG. 5: das Phasenverhalten von weiteren *n*-Dodecanhaltigen Systemen
- FIG. 6: das Phasenverhalten von weiteren *n*-Dodecanhaltigen Systemen
- FIG. 7: das Phasenverhalten von Octamethylcyclotetrasiloxan-haltigen Systemen
- FIG. 8 bis 10: erfindungsgemäß einsetzbare geschlossene Formen
- FIG. 11 bis 15: Mikroskopaufnahmen von erhaltenen Schäumen

Die verwendeten Substanznamen haben die folgende Bedeutung:
D4: Octamethylcyclotetrasiloxan
Desmophen® VP.PU 1431: Difunktionelles Polyesterpolyol der Firma Bayer MaterialScierice AG, OH-Zahl 310 mg KOH/g
Desmophen® VP.PU 20AP95: Polyetherpolyol auf der Basis von Saccharose der Firma Bayer MaterialScience AG, OH-Zahl 450 mg KOH/g
Desmodur® 44V20L: Gemisch von Diphenylmethan-4,4'-diisocyanat (MDI) mit Isomeren und höherfunktionellen Homologen
TCPP: Tris(2-chlorisopropyl)-phosphat
Q2-5211®: Siloxylierter Polyethylenoxidpolyether der Firma Dow Corning, 3-(Polyoxyethylen)propylheptamethyltrisiloxan, Endgruppen: OH und Heptamethyltrisiloxan, 32% Siloxangruppen, 68% Ethylenoxideinheiten; HLB-Wert des EO-Anteils: 11,5
Emuldac® AS-11: C₁₆ - C₁₈ - Alkohol-Polyethylenglycolether (11 EO)
Emuldac® AS-25: C₁₆ - C₁₈ - Alkohol-Polyethylenglycolether (25 EO)
Zonyl® FSN-100:Ethoxyliertes nichtionisches Fluorotensid, CAS Nr. 65545-80-4
DABCO: 1,4-Diazabicyclo[2.2.2]octan
DBTL: Dibutylzinndilaurat
Silwet® L-7607 : Siloxan Polyalkylenoxidcopolymer der Firma Momentive

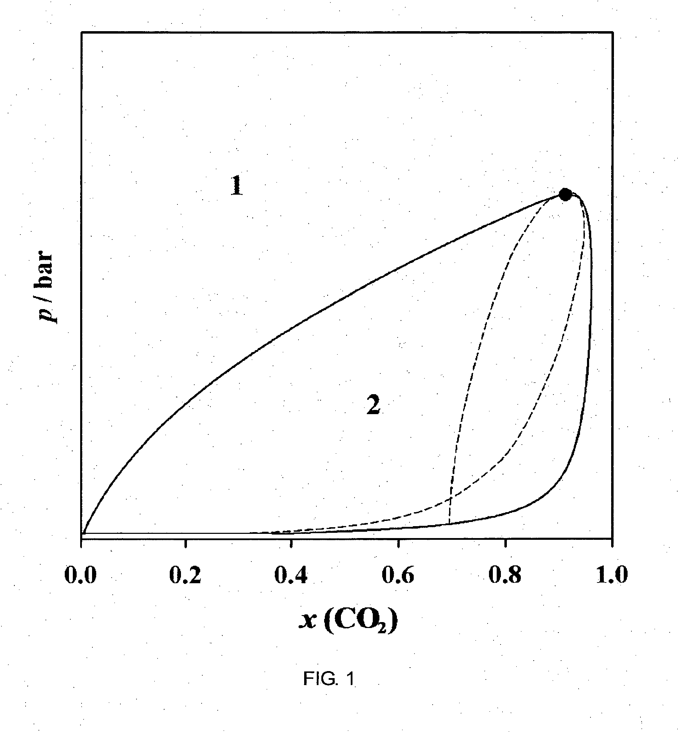

FIG. 1 zeigt schematisch ein druckabhängiges Phasendiagramm eines binären Systems, wobei CO₂ eine der beiden Komponenten des Systems ist. Die x-Achse bezeichnet den relativen Anteil des CO₂ im System. Bei hohen Drücken sind die beiden Komponenten vollständig miteinander mischbar, hier befindet sich also ein Einphasengebiet. Dieses ist als "1" gekennzeichnet.

Durch Druckerniedrigung wird eine Phasenseparation induziert. Der zweiphasige Bereich "2" wird von der sogenannten Binodalen umschlossen, welche als durchgehende Linie gezeichnet ist. Innerhalb dieses Bereichs befindet sich jedoch noch ein weiterer Bereich, der von der als strichlierte Linie gezeichneten Spinodalen umschlossen wird.

Der Unterschied zwischen diesen beiden Bereichen liegt in ihrer Stabilität. Gelangt man durch eine Expansion bei konstanter Zusammensetzung vom einphasigen in den zweiphasigen Bereich, der unterhalb der Binodalen liegt, so erfolgt die Phasenseparation durch Keimbildung. Dieser Bereich wird auch als metastabil bezeichnet, da für die Keimbildung eine Energiebarriere überwunden werden muss.

Soll eine Probe jedoch durch Expansion vom einphasigen Bereich direkt in den instabilen Bereich unterhalb der Spinodalen übergehen, so muss die Mischung die kritische (oder nahezu kritische) Zusammensetzung haben. Der kritische Punkt ist hierbei das Maximum der binodalen Kurve. Die spontane Entmischung findet hier ohne das Überschreiten einer Energiebarriere und somit ohne das Einsetzen eines Keimbildungsschritts statt. Die Entmischung wird durch lokale sinusförmige Fluktuationen der Konzentration induziert. Die sogenannte spinodale Entmischung besitzt eine charakteristische Phasenmorphologie.

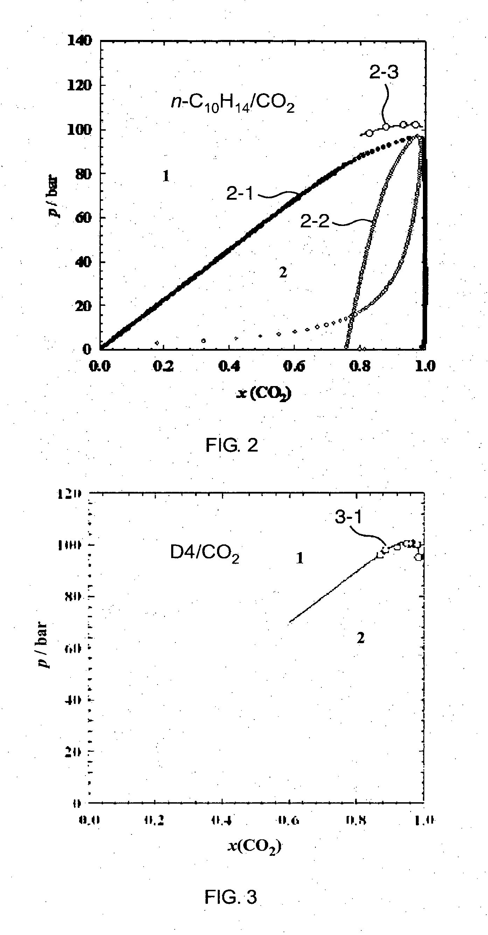

FIG. 2 zeigt das binäre Phasenverhalten in Abhängigkeit des Drucks für das System *n*-Decan/CO₂ als Beispiel für ein langkettiges Alkan als Co-Komponente D). Einphasige und zweiphasige Bereiche sind mit "1" und "2" gekennzeichnet. Die Datenpunkte 2-1 symbolisieren die berechnete Binodale des Systems. Entsprechend symbolisieren Datenpunkte 2-2 die berechnete Spinodale. Die Datenpunkte 2-3 bezeichnen die experimentell bestimmte Binodale. Der kritische Punkt des Systems wurde zu *x*(CO₂) = 0,94 und *p* = 102 bar bestimmt.

Vergleichbare Experimente wurden auch mit den höheren Homologen n-Dodecan, n-Tetradecan und n-Hexadecan durchgeführt. Hierbei beobachtete man einen Anstieg des Maximums der Binodalen mit steigender Kettenlänge des Alkans.

FIG. 3 zeigt das binäre Phasenverhalten in Abhängigkeit des Drucks für das System Octamethylcyclotetrasiloxan (D4)/CO₂ als Beispiel für ein Siloxan als Co-Komponente D). Einphasige und zweiphasige Bereiche sind mit "1" und "2" gekennzeichnet. Die Datenpunkte 3-1 bezeichnen die experimentell bestimmte Binodale. Der kritische Punkt des Systems wurde zu *x*(CO₂) = 0,96 sowie *p* = 101 bar bestimmt.

In den nachfolgenden Beispielen und dazugehörigen Figuren gibt der Wert α den relativen Gewichtsanteil des Treibmittels, also der unpolaren Phase, in der Polyol/Treibmittelmischung an. Der Wert ψ bezeichnet die Massenbrüche der einzelnen Komponenten in der polaren Phase. Der Wert β beschreibt die Zusammensetzung innerhalb der unpolaren Phase, sprich der Treibmittelkomponenten. Der Wert γ bezeichnet den relativen Gewichtsanteil der Tensidkomponente an der Gesamtzusammensetzung. Analog betrifft der Wert δ die Zusammensetzung der Tensidkomponente. In diesen Figuren bedeuten die Bezugszeichen 1 ein einphasiges Gebiet, in dem Mikroemulsionen auftreten, 2 ein zweiphasiges Gebiet, wobei das Tensid in der polaren Phase gelöst ist und 2̅ ein zweiphasiges Gebiet, in dem das Tensid in der unpolaren Phase gelöst ist.

Die einzelnen Beispiele betreffen jeweils bestimmte Polyol/Treibmittel/Tensidsysteme. Bei jeweils konstantem Anteil α wurde die Zusammensetzung der unpolaren Phase durch Hinzufügen einer Co-Komponente D) verändert. Die Temperatur des Systems wurde notiert und Verbindungslinien zwischen den Messpunkten interpoliert, um die Grenzen zwischen den ein-, zwei- und dreiphasigen Gebieten zu bestimmen. Auf diese Weise wurde ein Diagramm erhalten, welches einem Kahlweit-Fisch-Diagramm (M. Kahlweit, R. Strey, Angewandte Chemie International Edition, Band 28(8), Seite 654 (1985)) vergleichbar ist. Von besonderem Interesse für die Charakterisierung des Systems ist der Schnittpunkt der Verbindungslinien. Bei bekannter Lage des Schnittpunkts im Koordinatensystem von γ und T kann man bei einem geringfügig größeren Tensidanteil γ eine Mikroemulsion erwarten.

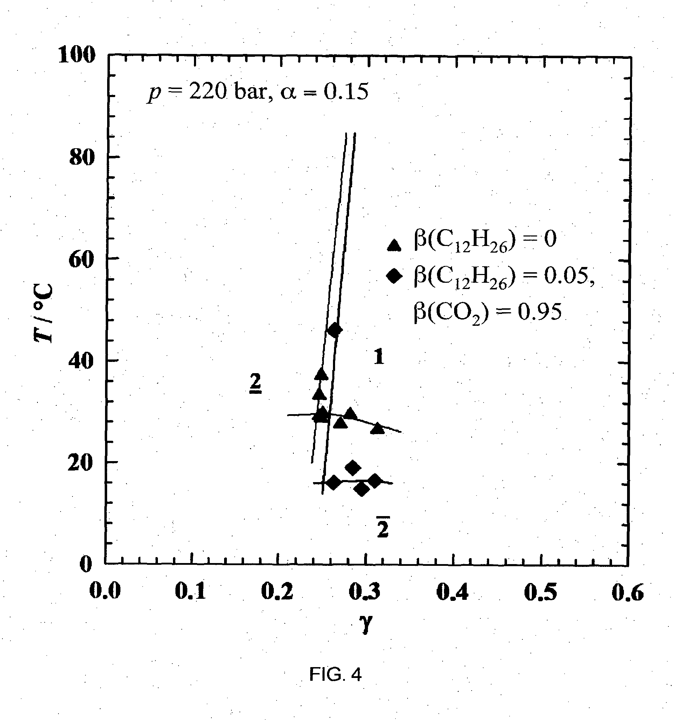

FIG. 4 zeigt das Phasenverhalten von Systemen mit Desmophen® VP.PU 1431, Glycerin, TCPP, Q2-5211®, *n*-Dodecan und überkritischem CO₂. Die polare Phase war wie folgt zusammengesetzt: ψ(1431) = 0,814; ψ(Glycerin) = 0,136; ψ(TCPP) = 0,050. Es wurde einmal überkritisches CO₂ ohne weitere Co-Komponente (Dreiecke) und mit 5 Gewichts-% (bezogen auf die Treibmittelkomponente) *n*-Dodecan als Co-Komponente (Vierecke) eingesetzt.

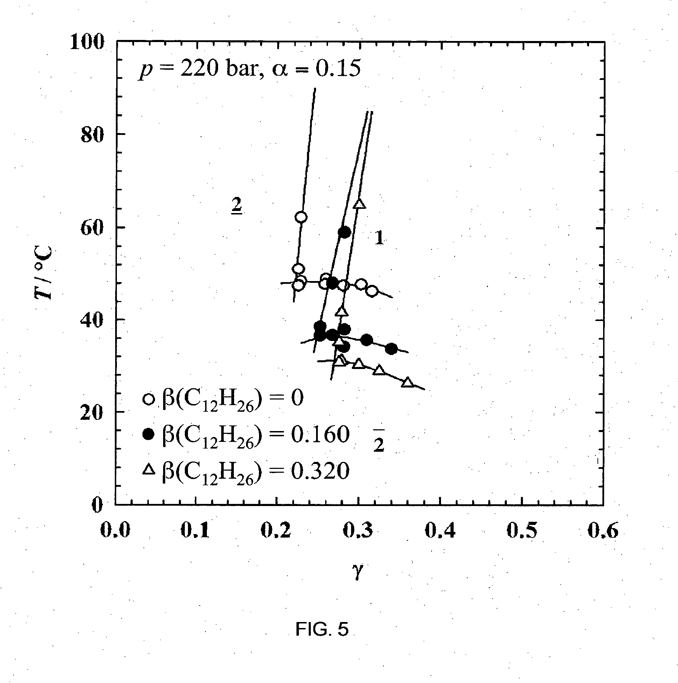

FIG. 5 zeigt das Phasenverhalten von weiteren Systemen mit Desmophen® VP.PU 1431, Glycerin, TCPP, Q2-5211®, *n*-Dodecan und überkritischem CO₂. Die polare Phase war wie folgt zusammengesetzt: ψ(1431) = 0,728; ψ(Glycerin) = 0,136; ψ(TCPP) = 0,136. Es wurde überkritisches CO₂ ohne weitere Co-Komponente (Kreise), mit 16 Gewichts-% (bezogen auf die Treibmittelkomponente) *n*-Dodecan als Co-Komponente (gefüllte Kreise) und mit 32 Gewichts-% (bezogen auf die Treibmittelkomponente) *n*-Dodecan als Co-Komponente (Dreiecke) eingesetzt.

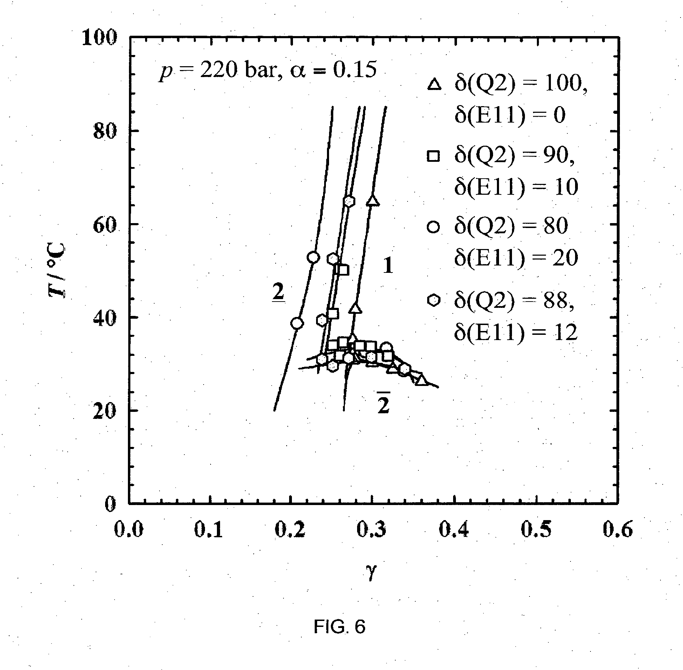

FIG. 6 zeigt das Phasenverhalten von weiteren Systemen mit Desmophen® VP.PU 1431, Glycerin, TCPP, Q2-5211®, Emuldac® AS-11, *n*-Dodecan und überkritischem CO₂. Die polare Phase war wie folgt zusammengesetzt: ψ(1431) = 0,728; ψ(Glycerin) = 0.136; ψ(TCPP) = 0,136. In diesen Untersuchungen wurde die Tensidkomponente durch die Zugabe von Emuldac® AS-11 modifiziert. Verwendet wurden die folgenden Tensidgemische (Gewichts-% bezogen auf die Tensidkomponente): Q2-5211®:Emuldac® AS-11 = 100:0 (Dreiecke), 90:10 (Vierecke), 80:20 (Kreise) und 88:12 (Sechsecke).

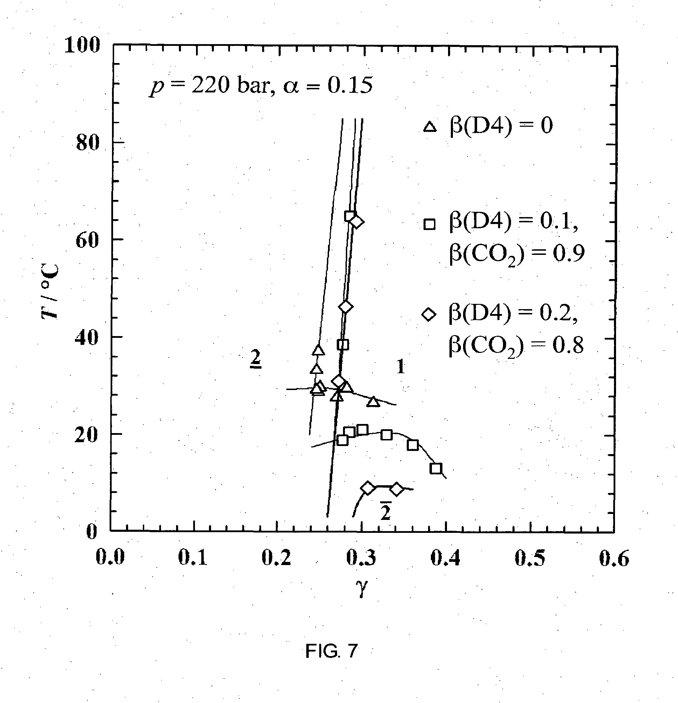

FIG. 7 zeigt das Phasenverhalten von Systemen mit Desmophen® VP.PU 1431, Glycerin, TCPP, Q2-5211®, Octamethylcyclotetrasiloxan (D4) und überkritischem CO₂. Die polare Phase war wie folgt zusammengesetzt: ψ(VP.PU1431) = 0,814; ψ(Glycerin) = 0,136; ψ(TCPP) = 0,050. Es wurde überkritisches CO₂ ohne weitere Co-Komponente (Dreiecke), mit 10 Gewichts-% (bezogen auf die Treibmittelkomponente) D4 als Co-Komponente (Vierecke) und mit 20 Gewichts-% (bezogen auf die Treibmittelkomponente) D4 als Co-Komponente (gedrehte Vierecke) eingesetzt.

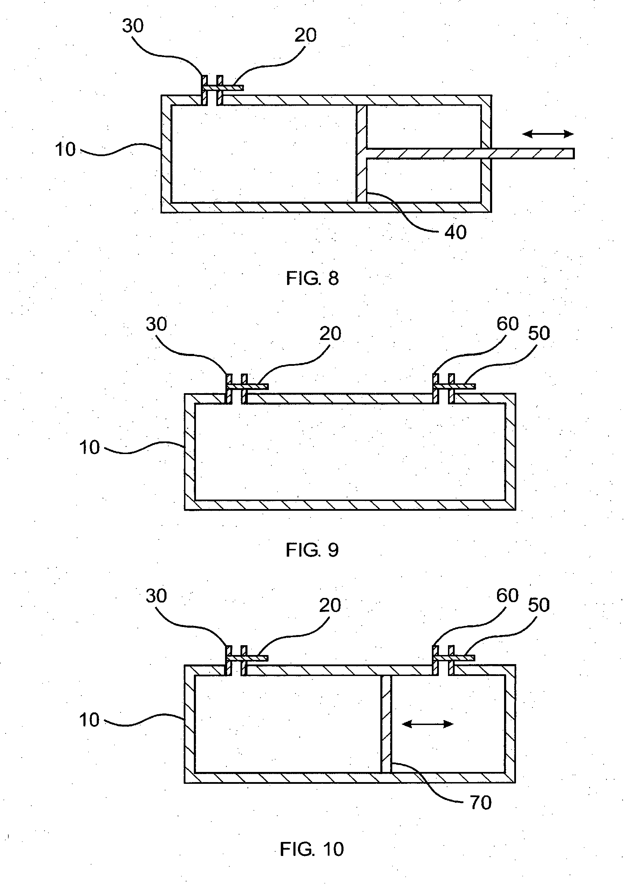

FIG. 8 zeigt eine erfindungsgemäß einsetzbare geschlossene Form. Die Form weist ein äußeres Gehäuse 10 auf mit einer schematisch dargestellten, durch Absperreinrichtung 20 verschließbaren Einfüllöffnung 30. Die Mischung umfassend die benötigten Reaktionskomponenten wird hierüber in die Form eingetragen. Eine kolbenartig ausgeführte Dichtung 40 lässt sich innerhalb des Gehäuses 10 bewegen. Auf diese Weise wird innerhalb der Form ein von der Dichtung 40 begrenztes Volumen zur Aufnahme der Reaktionsmischung geschaffen. Die Lage der Dichtung 40 innerhalb des Gehäuses kann durch Verschieben mittels der aus dem Gehäuse 10 herausragenden stangenförmigen Fortsetzung der Dichtung 40, also durch mechanischen Druck, erreicht werden.

FIG. 9 zeigt eine weitere erfindungsgemäß einsetzbare geschlossene Form. Die Form weist ebenfalls ein äußeres Gehäuse 10 mit einer schematisch dargestellten, durch Absperreinrichtung 20 verschließbaren Einfüllöffnung 30 auf. Die Mischung umfassend die benötigten Reaktionskomponenten wird hierüber in die Form eingetragen. Die externe Beeinflussung des Drucks in der Form erfolgt durch Anlegen eines Gasdrucks über eine weitere Ventileinrichtung 60. Diese ist schematisch dargestellt und mittels Absperreinrichtung 50 bei Bedarf verschließbar. Es ist ebenfalls im Rahmen der vorliegenden Erfindung denkbar, dass die Einfüllöffnung 30 und die Ventileinrichtung 60 miteinander kombiniert werden. Beispielsweise kann dann ein an der Einfüllöffnung 30 angesetzter Mischkopf auch gleichzeitig die Form mit Gasdruck beaufschlagen.

FIG. 10 zeigt eine weitere erfindungsgemäß einsetzbare geschlossene Form. Die Form weist ebenfalls ein äußeres Gehäuse 10 mit einer schematisch dargestellten, durch Absperreinrichtung 20 verschließbaren Einfüllöffnung 30 auf. Die Mischung umfassend die benötigten Reaktionskomponenten wird hierüber in die Form eingetragen. Eine frei bewegliche oder auch als frei schwimmende Dichtung 70 befindet sich innerhalb des Gehäuses 10. Auf diese Weise wird innerhalb der Form ein von der Dichtung 40 begrenztes Volumen zur Aufnahme der Reaktionsmischung geschaffen (Reaktionsvolumen). Auf der anderen Seite der Dichtung 70 wird ein weiteres Volumen innerhalb der Form 10 erhalten, welches hier als Arbeitsvolumen bezeichnet werden soll.

Im Gegensatz zu der in FIG 8 gezeigten Form wird die Lage der Dichtung nicht durch mechanischen Druck, sondern durch Gasdruck verändert. Über eine Ventileinrichtung 60, die bei Bedarf mit Absperreinrichtung 50 verschließbar ist, wird in dem Arbeitsvolumen der Druck angelegt. Auf diese Weise kann das Arbeitsvolumen relativ zum Reaktionsvolumen vergrößert oder verkleinert werden. Dieses geht einher mit einer Vergrößerung oder Verringerung des Drucks im Reaktionsvolumen. Selbstverständlich können nicht nur Gase mittels Ventileinrichtung 60 in das Arbeitsvolumen eingeleitet werden, sondern auch andere Fluide wie zum Beispiel Hydraulikflüssigkeiten.

### Schäumversuch 1:

Ein System aus Wasser und NaCl als polare Phase und CO₂, n-Decan, Zonyl® FSN-100 sowie Emuldac® AS-25 als unpolare Phase wurde von einem Anfangsdruck von 90 bar auf 60 bar entspannt. Die weiteren Parameter des Systems waren: T = 50 °C, y(a) = 0,25, w(b) = 0,205, β(n-Decan) = 0,15, ε = 0,01 und δ(FSN-100) = 0,60.

Innerhalb von circa 20 ms fand dabei eine Eintrübung des Systems statt. Diese Beobachtung steht in gutem Einklang mit einer spinodalen Entmischung der Ölkomponente. Die theoretisch berechnete spinodale Entmischungsgeschwindigkeit von *n*-Decan und Wasser beträgt 30 ms. Weiterhin konnte beobachtet werden, dass die Struktur der einphasigen Mikroemulsion während der Expansion für längere Zeit erhalten blieb. Dieses wird zum einen durch die schnelle Eintrübung mit gleichzeitigem Erhalt der Durchsichtigkeit und zum anderen durch die Volumenzunahme der Mikroemulsion impliziert.

### Schäumversuch 2:

Ein System aus Desmophen® VP.PU 1431, Desmophen® VP.PU 20AP95 und Glycerin als polare Phase und CO₂, *n*-Decan sowie Q2-5211® als unpolare Phase wurde von einem Anfangsdruck von 110 bar auf 91 bar entspannt. Die weiteren Parameter des Systems waren: ψ(VP.PU 1431) = 0,742; ψ(Glycerin) = 0,158; ψ(VP.PU20AP95) = 0,100, T = 50 °C, γ(a) = 0,30, w(b) = 0,15 und β(*n-*Decan) = 0,15.

Auch hier wurde eine Eintrübung des Systems beobachtet und weiterhin eine Volumenzuwachs der Mikroemulsion innerhalb der Messzelle von insgesamt ΔV(Mikroemulsion) = + 14% festgestellt. Die einzige Komponente, deren Volumen so stark vom Druck abhängt, ist das CO₂. Die Struktur der ausgewählten Probe für die Schäumversuche entsprach der einer Mikroemulsion mit gasgefüllten Mikroemulsionströpfchen in Wasser. Durch die Expansion ist das überkritische CO₂ von einer flüssigkeitsälinlichen zu einer gasähnlichen Dichte übergegangen und hat an Volumen zugenommen. Theoretisch berechnet sich hierfür einen Volumenzuwachs für reines CO₂ von ΔV(CO₂) = + 16%, was innerhalb der Fehlergrenzen mit dem beobachten Volumenzuwachs übereinstimmt.

### Polyurethan-Schäume

Eine gemäß der erfindungsgemäßen Lehre erhältliche Mikroemulsion wurde zu einem Polyurethanschaum umgesetzt. Hierbei wurde die Mischung aus Polyolen und Katalysatoren (DBTDL und DABCO) und Tensid bei 34 °C und einem Druck von 170 bar mit CO₂ versetzt. Ohne auf eine Theorie beschränkt zu sein, wird angenommen, dass sich hierbei eine Mikroemulsion von scCO₂-Tröpfchen in der Polyolphase bildete. Diese Emulsion wurde in einem Hochdruck-Mischkopf mit dem Polyisocyanat versetzt. Anschließend wurde die Reaktionsmischung in eine Form (gemäß FIG. 10) mit einem bestimmten, in der nachfolgenden Tabelle angegebenen Gegendruck eingebracht. Folglich herrschten bei den erfindungsgemäßen Beispielen bezüglich des CO₂ in der Form immer noch überkritische Bedingungen. Erst nach dem Einbringen in die auf 35 °C temperierte Form und einer gewissen Verweilzeit wurde der Druck auf Normaldruck gesenkt. Die Gewichtsangaben in diesen Beispielen sind in Gewichtsteilen angegeben. Das gesamte Schussgewicht betrug jeweils 120 g.

| **Komponenten** | **Beispiel 3** | **Beispiel 4** | **Beispiel 5** | **Beispiel 6** | **Vergleichsbeispiel 7** |
|---|---|---|---|---|---|
| Desmophen® VP.PU 1431 | 95,00 | 95,00 | 95,00 | 95,00 | 95,00 |
| Glyzerin | 15,00 | 15,00 | 15,00 | 15,00 | 15,00 |
| Silwet L-7607 | 45,00 | 45,00 | 45,00 | 45,00 | 45,00 |
| DABCO | 0,10 | 0,10 | 0,10 | 0,10 | 0,28 |
| DBTDL | 0,07 | 0,07 | 0,07 | 0,07 | 0,07 |
| Phenyl-tris(trimethylsiloxy)silan | 1,45 | 1,45 | 1,45 | 1,45 | 1,45 |
| | | | | | |
| CO₂ | 28,90 | 35,00 | 40,50 | 28,90 | 40,50 |
| | | | | | |
| Desmodur® 44V20L | 108,45 | 108,44 | 108,45 | 108,45 | 108,45 |
| | | | | | |
| Kennzahl | 80,00 | 80,00 | 80,00 | 80,00 | 80,00 |
| Isocyanattemperatur [°C] | 35 | 35 | 33 | 34 | 34 |
| Polyoltemperatur [°C] | 33 | 34 | 35 | 35 | 35 |
| Mischzeit [sec] | 2 | 2 | 2 | 2 | 2 |
| Gegendruck [bar] | 100 | 100 | 100 | 80 | 30 |
| Verweilzeit | 90 min | 90 min | 90 min | 36 sec | 90 min |
| Entformzeit [min] | 90 | 90 | 90 | 30 | 90 |

Im Vergleichsbeispiel 7 wurde bei einem Gegendruck von 30 bar eingebracht. Folglich herrschten hier keine überkritischen Bedingungen für das CO₂. Die Probe war im Gegensatz zu den erfindungsgemäßen Beispielen inhomogen und wies Schlieren auf.

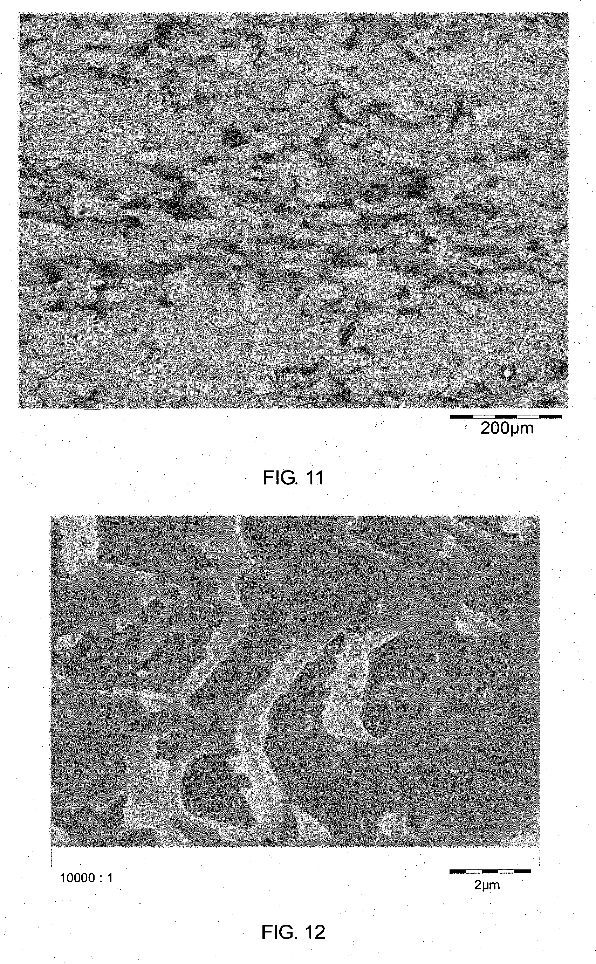

FIG. 11 zeigt eine lichtmikroskopische Aufnahme des geschäumten Materials des erfindungsgemäßen Beispiels 5. Dabei zeigt sich, dass die durchschnittliche Porengröße deutlich kleiner als 80 µm ist. Zusätzlich zeigt die Elektronenmikroskopaufnahme (REM) des geschäumten Materials aus Beispiel 5 in FIG. 12, dass die zahlenmäßig meisten Poren kleiner als 500 nm sind und damit in der Lichtmikroskopaufnahme nicht sichtbar sind.

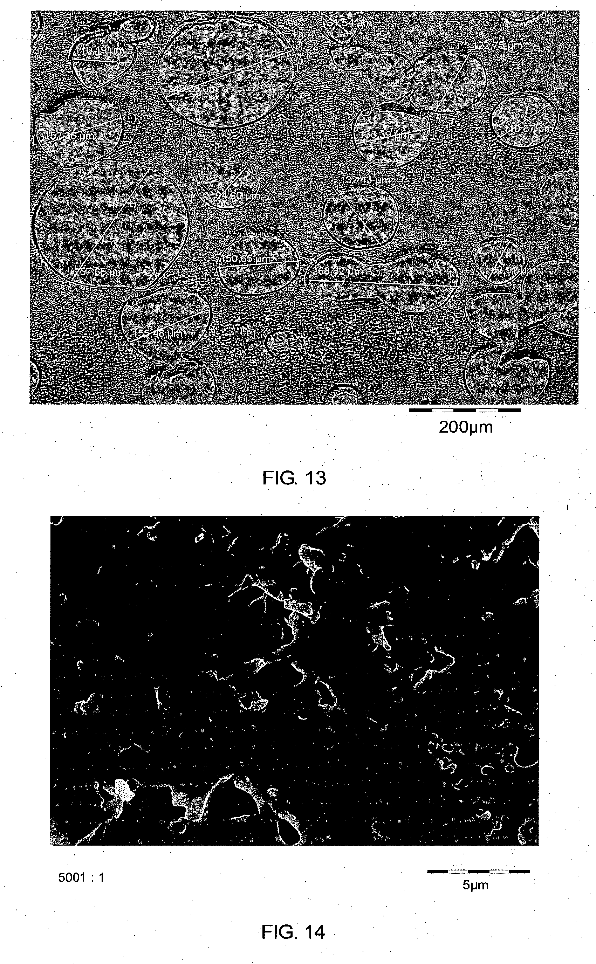

FIG. 13 zeigt eine lichtmikroskopische Aufnahme des geschäumten Materials des Vergleichsbeispiels 7. Dabei zeigt sich, dass die durchschnittliche Porengröße deutlich größer als 100 µm ist. Zusätzlich zeigt die Elektronenmikroskopaufnahme (REM) des geschäumten Materials aus Beispiel 7 in FIG. 14, dass sich kaum Poren kleiner als 500 nm gebildet haben.

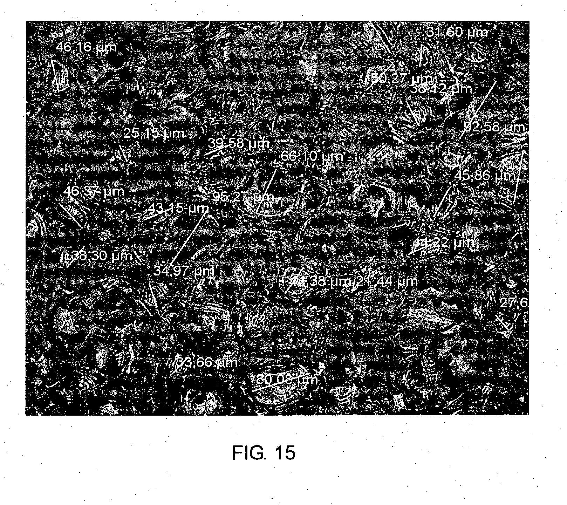

FIG. 15 zeigt eine lichtmikroskopische Aufnahme des geschäumten Materials des erfindungsgemäßen Beispiels 6. Dabei zeigt sich, dass die durchschnittliche Porengröße deutlich kleiner als 80 µm ist.

Als Ergebnis lässt sich zusammenfassen:

FIG. 11 und FIG 12. zeigen, dass bei Beispiel 5 die durchschnittliche Porengröße deutlich kleiner als 1 µm ist. Es bilden sich nur wenige Blasen im Bereich von 20-100 µm. Die allermeisten Poren sind kleiner als 500 nm.

FIG. 13 und 14 zeigen, dass im Gegensatz zu Beispiel 5 bei dem Vergleichsbeispiel 7 die Porengröße deutlich größer als 100 µm ist.

FIG. 15 zeigt, dass bei Beispiel 6 mit einer Verweilzeit von 38 sec sich eine Porengröße von kleiner 80 µm ergibt.

## Patentansprüche

1. Verfahren zur Herstellung eines geschäumten Materials, umfassend die Schritte:
- Bereitstellen einer emulsionsförmigen Zusammensetzung, umfassend:
A) eine matrixbildende Komponente, wobei die gebildete Matrix bei Raumtemperatur fest ist,
B) eine Tensidkomponente, welche die Emulgierung der Treibmittelkomponente C) samt Co-Komponente D) in der Matrixkomponente A) vermittelt,
C) eine in der Komponente A) emulgierte Treibmittelkomponente, welche überkritisches oder nahekritisches CO₂ umfasst; und
- Überführen des CO₂ der Treibmittelkomponente C) in den unterkritischen Zustand durch Druckerniedrigung;
**dadurch gekennzeichnet, dass**
die Treibmittelkomponente C) weiterhin eine hydrophobe Co-Komponente D) umfasst,
welche in überkritischem CO₂ bei einem Druck von ≥ 150 bar löslich ist, in unterkritischem CO₂ bei einem Druck von ≤ 40 bar nicht löslich ist und in der Komponente A) nicht löslich ist und weiterhin
die Co-Komponente D) in einem Anteil von ≥ 3 3 Gewichts-% bis ≤ 35 Gewichts-% der Treibmittelkomponente vorliegt.

2. Verfahren gemäß Anspruch 1, wobei die Komponente A) eine gegenüber Polyisocyanaten reaktive Verbindung und ein Polyisocyanat umfasst.

3. Verfahren gemäß Anspruch 2, wobei die gegenüber Polyisocyanaten reaktive Verbindung ein Polyol ist und das Polyol ausgewählt ist aus der Gruppe umfassend Polyetherpolyole, Polyesterpolyole, Polycarbonatpolyole, Polyetheresterpolyole, und/oder Polyacrylatpolyole und wobei weiterhin die OH-Zahl des Polyols ≥ 100 mg KOH/g bis ≥ 800 mg KOH/g und die durchschnittliche OH-Funktionalität der Polyole ≥ 2 beträgt.

4. Verfahren gemäß Anspruch 1, wobei die Komponente A) Acrylamid, Epoxide und/oder Phenol, Melamin und/oder Harnstoff-Formaldehyd umfasst.

5. Verfahren gemäß Anspruch 1, wobei die Komponente A) Polystyrol, Polyvinylchlorid, Polyvinylacetat, Polyethylenterephthalat, Polymethylmethacrylat, thermoplastisches Polyurethan, Polypropylen, Polyethylen und/oder Copolymere aus Styrol, Butadien, Acrylnitril, Methylmethacrylat, Vinylacetat und/oder Blends dieser Polymere umfasst.

6. Verfahren gemäß Anspruch 1, wobei die Tensidkomponente B) ausgewählt ist aus der Gruppe umfassend alkoxylierte Alkanole, alkoxylierte Alkylphenole, alkoxylierte Fettsäuren, Fettsäureester, Polyalkylenamine, Alkylsulfate, Alkylpolyether, Alkylpolyglucoside, Phosphatidylinositole, fluorierte Tenside, Polysiloxangruppen umfassende Tenside und/oder Bis(2-ethyl-1-hexyl)sulfosuccinat.

7. Verfahren gemäß Anspruch 1, wobei die Co-Komponente D) ausgewählt ist aus der Gruppe umfassend Alkane, Alkene, Aromaten, Ester, Ether, Ketone mit ≥ 7 bis ≤ 20 C-Atomen und/oder lineare, verzweigte oder cyclische Polysiloxane mit ≥ 3 bis ≤ 20 Si-Atomen.

8. Verfahren gemäß Anspruch 1, wobei die emulsionsförmige Zusammensetzung bei einem Druck von ≥ 50bar bis ≤ 200 bar und einer Temperatur von ≥ 20 °C bis ≤ 80 °C bereitgestellt wird.

9. Verfahren gemäß Anspruch 1, wobei das Überführen des CO₂ der Treibmittelkomponente C) in den unterkritischen Zustand in einer geschlossenen Form stattfindet, wobei die geschlossene Form nicht Teil eines Mischkopfs einer Mischanlage ist und so eingerichtet ist, dass deren inneres Volumen und/oder der in ihrem Inneren herrschende Druck nach dem Einbringen der Mischung durch externe Beeinflussung verändert werden kann.

10. Verfahren gemäß Anspruch 1, wobei in der emulsionsförmigen Zusammensetzung die Komponenten die folgenden Anteile aufweisen, wobei die Summe der Gewichtsanteile ≤ 100 Gewichts-% beträgt:
A) ≥ 60 Gewichts-% bis ≤ 85 Gewichts-% einer Reaktionsharzmischung aus MDI und/oder pMDI mit Polyolen, die eine mittlere Hydroxylzahl von ≥ 250 mg KOH/g haben
B) ≥ 4 Gewichts-% bis ≤ 30 Gewichts-% eines Polysiloxangruppen umfassendes Tensids
C) ≥ 5 Gewichts-% bis ≤ 30 Gewichts-% CO₂ und
D) ≥ 0,3 Gewichts-% bis ≤ 10 Gewichts-% Dodekan

11. Emulsionsförmige Zusammensetzung, geeignet zur Herstellung eines geschäumten Materials, umfassend:
A) eine matrixbildende Komponente, wobei die gebildete Matrix bei Raumtemperatur fest ist,
B) eine Tensidkomponente, welche die Emulgierung der Treibmittelkomponente C) samt Co-Komponente D) in der Matrixkomponente A) vermittelt, und
C) eine in der Komponente A) emulgierte Treibmittelkomponente, welche überkritisches oder nahekritisches CO₂ umfasst;
**dadurch gekennzeichnet, dass**
die Treibmittelkomponente C) weiterhin eine hydrophobe Co-Komponente D) umfasst,
welche in überkritischem CO₂ bei einem Druck von ≥ 150 bar löslich ist, in unterkritischem CO₂ bei einem Druck von ≤ 40 bar nicht löslich ist und in der Komponente A) nicht löslich ist und weiterhin
die Co-Komponente D) in einem Anteil von ≥ 3 Gewichts-% bis ≤ 35 Gewichts-% der Treibmittelkomponente vorliegt.

12. Geschäumtes Material, erhältlich durch ein Verfahren gemäß einem der Ansprüche 1 bis 10, umfassend eine feste Matrix und in der Matrix verteilte Gasblasen,
**dadurch gekennzeichnet, dass**
die Grenzfläche zwischen Matrix und Gasblase auf der dem Inneren der Gasblase zugewandten Seite eine hydrophobe Co-Komponente D) angeordnet ist, welche in überkritischem CO₂ bei einem Druck von ≥ 150 bar löslich ist, in unterkritischem CO₂ bei einem Druck von ≤ 40 bar nicht löslich ist und in der Komponente A) nicht löslich ist.

13. Geschäumtes Material gemäß Anspruch 12 mit einer Porendichte von ≥ 10⁷ Poren/cm³ bis ≤ 10¹⁸ Poren/cm³.

14. Geschäumtes Material gemäß Anspruch 12, wobei die feste Matrix ein Polyurethanpolymer umfasst.

15. Geschäumtes Material gemäß Anspruch 14, wobei das Material aus einer emulsionsförmigen Zusammensetzung mit Komponenten in den folgenden Anteilen erhältlich ist, wobei die Summe der Gewichtsanteile ≤ 100 Gewichts-% beträgt:
A) ≥ 60 Gewichts-% bis ≤ 85 Gewichts-% -% einer Reaktionsharzmischung aus MDI und/oder pMDI mit Polyolen, die eine mittlere Hydroxylzahl von ≥ 250 mg KOH/g haben
B) ≥ 4 Gewichts-% bis ≤ 30 Gewichts-% eines Polysiloxangruppen umfassendes Tensids
C) ≥ 5 Gewichts-% bis ≤ 30 Gewichts-% CO₂ und
D) ≥ 0,3 Gewichts-% bis ≤ 10 Gewichts-% Dodekan.

## Claims

1. Process for producing a foamed material, comprising the steps:
- providing a composition in the form of emulsion, comprising:
A) a matrix-forming component, wherein the matrix formed is solid at room temperature,
B) a surfactant component which aids the emulsification of the blowing agent component C) plus co-component D) in the matrix component A),
C) a blowing agent component, which comprises supercritical or near-critical CO₂, emulsified in component A); and
- bringing the CO₂ of the blowing agent component C) into the subcritical state by lowering the pressure;
**characterized in that**
the blowing agent component C) further comprises a hydrophobic co-component D),
which is soluble in supercritical CO₂ at a pressure of ≥ 150 bar, is insoluble in subcritical CO₂ at a pressure of ≥ 40 bar and is insoluble in component A) and furthermore
the co-component D) is present in a proportion from ≥ 3 wt% to ≤ 35 wt% of the blowing agent component.

2. Process according to Claim 1, wherein component A) comprises a compound that is reactive with polyisocyanates and a polyisocyanate.

3. Process according to Claim 2, wherein the compound that is reactive with polyisocyanates is a polyol and the polyol is selected from the group comprising polyether polyols, polyester polyols, polycarbonate polyols, polyetherester polyols, and/or polyacrylate polyols and wherein furthermore the OH number of the polyols is ≥ 100 mg KOH/g to ≤ 800 mg KOH/g and the average OH-functionality of the polyols is ≥ 2.

4. Process according to Claim 1, wherein component A) comprises acrylamide, epoxides and/or phenol, melamine and/or urea-formaldehyde.

5. Process according to Claim 1, wherein component A) comprises polystyrene, polyvinyl chloride, polyvinyl acetate, polyethylene terephthalate, polymethyl methacrylate, thermoplastic polyurethane, polypropylene, polyethylene and/or copolymers of styrene, butadiene, acrylonitrile, methyl methacrylate, vinyl acetate and/or blends of these polymers.

6. Process according to Claim 1, wherein the surfactant component B) is selected from the group comprising alkoxylated alkanols, alkoxylated alkyl phenols, alkoxylated fatty acids, fatty acid esters, polyalkyleneamines, alkyl sulphates, alkyl polyethers, alkyl polyglucosides, phosphatidyl inositols, fluorinated surfactants, surfactants comprising polysiloxane groups and/or bis(2-ethyl-1-hexyl)sulphosuccinate.

7. Process according to Claim 1, wherein the co-component D) is selected from the group comprising alkanes, alkenes, aromatics, esters, ethers, ketones with ≥ 7 to ≤ 20 carbon atoms and/or linear, branched or cyclic polysiloxanes with ≥ 3 to ≤ 20 Si atoms.

8. Process according to Claim 1, wherein the composition in the form of emulsion is prepared at a pressure of ≥ 50bar to ≤ 200 bar and a temperature of ≥ 20°C to ≤ 80°C.

9. Process according to Claim 1, wherein bringing the CO₂ of the blowing agent component C) into the subcritical state takes place in a closed mould, wherein the closed mould is not part of a mixing head of a mixing unit and is arranged so that its internal volume and/or the pressure prevailing inside it after introduction of the mixture can be altered by external action.

10. Process according to Claim 1, wherein in the composition in the form of emulsion, the components have the following proportions, wherein the total of the proportions by weight is ≤ 100 wt%:
A) ≥ 60 wt% to ≤ 85 wt% of a reactive resin mixture of MDI and/or pMDI with polyols that have an average hydroxyl number of ≥ 250 mg KOH/g
B) ≥ 4 wt% to ≤ 30 wt% of a surfactant comprising polysiloxane groups
C) ≥ 5 wt% to ≤ 30 wt% of CO₂ and
D) ≥ 0.3 wt% to ≤ 10 wt% of dodecane.

11. Composition in the form of emulsion, suitable for producing a foamed material, comprising:
A) a matrix-forming component, wherein the matrix formed is solid at room temperature,
B) a surfactant component which aids the emulsification of the blowing agent component C) plus co-component D) in the matrix component A), and
C) a blowing agent component, which comprises supercritical or near-critical CO₂, emulsified in component A);
**characterized in that**
the blowing agent component C) further comprises a hydrophobic co-component D),
which is soluble in supercritical CO₂ at a pressure of ≥ 150 bar, is insoluble in subcritical CO₂ at a pressure of ≤ 40 bar and is insoluble in component A) and furthermore
the co-component D) is present in a proportion from ≥ 3 wt% to ≤ 35 wt% of the blowing agent component.

12. Foamed material, obtainable by a process according to one of Claims 1 to 10, comprising a solid matrix and gas bubbles distributed in the matrix,
**characterized in that**
on the interface between matrix and gas bubble on the side facing the interior of the gas bubble, a hydrophobic co-component D) is arranged, which is soluble in supercritical CO₂ at a pressure of ≥ 150 bar, is insoluble in subcritical CO₂ at a pressure of ≤ 40 bar and is insoluble in component A).

13. Foamed material according to Claim 12 with a pore density from ≥ 10⁷ pores/cm³ to ≤ 10¹⁸ pores/cm³.

14. Foamed material according to Claim 12, wherein the solid matrix comprises a polyurethane polymer.

15. Foamed material according to Claim 14, wherein the material is obtainable from a composition in the form of emulsion with components in the following proportions, wherein the total of the proportions by weight is ≤ 100 wt%:
A) ≥ 60 wt% to ≤ 85 wt% -% of a reactive resin mixture of MDI and/or pMDI with polyols that have an average hydroxyl number of ≥ 250 mg KOH/g
B) ≥ 4 wt% to ≤ 30 wt% of a surfactant comprising polysiloxane groups
C) ≥ 5 wt% to ≤ 30 wt% of CO₂ and
D) ≥ 0.3 wt% to ≤ 10 wt% of dodecane.

## Revendications

1. Procédé de fabrication d'un matériau expansé, comprenant les étapes suivantes :
- la préparation d'une composition sous forme d'émulsion, comprenant :
A) un composant formant une matrice, la matrice formée étant solide à température ambiante,
B) un composant tensioactif, qui permet l'émulsification du composant agent gonflant C) avec le co-composant D) dans le composant matrice A),
C) un composant agent gonflant émulsifié dans le composant A), qui comprend du CO₂ supercritique ou presque critique ; et
- la transformation du CO₂ du composant agent gonflant C) à l'état sous-critique par réduction de la pression ;
**caractérisé en ce que**
le composant agent gonflant C) comprend en outre un co-composant hydrophobe D),
qui est soluble dans le CO₂ supercritique à une pression ≥ 150 bar, non soluble dans le CO₂ sous-critique à une pression ≤ 40 bar et non soluble dans le composant A), et
le co-composant D) est présent en une proportion de ≥ 3 % en poids à ≤ 35 % en poids du composant agent gonflant.

2. Procédé selon la revendication 1, dans lequel le composant A) comprend un composé réactif avec les polyisocyanates et un polyisocyanate.

3. Procédé selon la revendication 2, dans lequel le composé réactif avec les polyisocyanates est un polyol et le polyol est choisi dans le groupe comprenant les polyéther-polyols, les polyester-polols, les polycarbonate-polyols, les polyétherester-polyols et/ou les polyacrylate-polyols, et dans lequel l'indice OH du polyol est de ≥ 100 mg KOH/g à ≤ 800 mg KOH/g et la fonctionnalité OH moyenne des polyols est ≥ 2.

4. Procédé selon la revendication 1, dans lequel le composant A) comprend de l'acrylamide, des époxydes et/ou du phénol, de la mélamine et/ou de l'urée-formaldéhyde.

5. Procédé selon la revendication 1, dans lequel le composant A) comprend du polystyrène, du polychlorure de vinyle, du polyacétate de vinyle, du polytéréphtalate d'éthylène, du polyméthacrylate de méthyle, du polyuréthane thermoplastique, du polypropylène, du polyéthylène et/ou des copolymères de styrène, butadiène, acrylonitrile, méthacrylate de méthyle, acétate de vinyle et/ou des mélanges de ces polymères.

6. Procédé selon la revendication 1, dans lequel le composant tensioactif B) est choisi dans le groupe comprenant les alcanols alcoxylés, les alkylphénols alcoxylés, les acides gras alcoxylés, les esters d'acides gras, les polyalkylène-amines, les sulfates d'alkyle, les polyéthers d'alkyle, les polyglucosides d'alkyle, les phosphatidylinositols, les tensioactifs fluorés, les tensioactifs comprenant des groupes polysiloxane et/ou le sulfosuccinate de bis(2-éthyl-1-hexyle).

7. Procédé selon la revendication 1, dans lequel le co-composant D) est choisi dans le groupe comprenant les alcanes, les alcènes, les composés aromatiques, les esters, les éthers, les cétones contenant de ≥ 7 à ≤ 20 atomes C et/ou les polysiloxanes linéaires, ramifiés ou cycliques contenant ≥ 3 à ≤ 20 atomes Si.

8. Procédé selon la revendication 1, dans lequel la composition sous forme d'émulsion est préparée à une pression de ≥ 50 bar à ≤ 200 bar et à une température de ≥ 20 °C à ≤ 80 °C.

9. Procédé selon la revendication 1, dans lequel la transformation du CO₂ du composant agent gonflant C) à l'état sous-critique a lieu dans un moule fermé, le moule fermé ne faisant pas partie d'une tête de mélange d'une unité de mélange et étant conçu de sorte que son volume intérieur et/ou la pression régnant dans son espace intérieur puisse être modifiés par une influence externe après l'introduction du mélange.

10. Procédé selon la revendication 1, dans lequel les composants présentent les proportions suivantes dans la composition sous forme d'émulsion, la somme des proportions en poids étant ≤ 100 % en poids :
A) ≥ 60 % en poids à ≤ 85 % en poids d'un mélange de résines réactives de MDI et/ou pMDI avec des polyols, qui présentent un indice hydroxyle moyen ≥ 250 mg KOH/g,
B) ≥ 4 % en poids à ≤ 30 % en poids d'un tensioactif comprenant des groupes polysiloxane,
C) ≥ 5 % en poids à ≤ 30 % en poids de CO₂ et
D) ≥ 0,3 % en poids à ≤ 10 % en poids de dodécane.

11. Composition sous forme d'émulsion, appropriée pour la fabrication d'un matériau expansé, comprenant :
A) un composant formant une matrice, la matrice formée étant solide à température ambiante,
B) un composant tensioactif, qui permet l'émulsification du composant agent gonflant C) avec le co-composant D) dans le composant matrice A), et
C) un composant agent gonflant émulsifié dans le composant A), qui comprend du CO₂ supercritique ou presque critique ;
**caractérisée en ce que**
le composant agent gonflant C) comprend en outre un co-composant hydrophobe D),
qui est soluble dans le CO₂ supercritique à une pression ≥ 150 bar, non soluble dans le CO₂ sous-critique à une pression ≤ 40 bar et non soluble dans le composant A), et
le co-composant D) est présent en une proportion de ≥ 3 % en poids à ≤ 35 % en poids du composant agent gonflant.

12. Matériau expansé, pouvant être obtenu par un procédé selon l'une quelconque des revendications 1 à 10, comprenant une matrice solide et des bulles de gaz réparties dans la matrice,
**caractérisé en ce que**
un co-composant D) hydrophobe est agencé à l'interface entre la matrice et les bulles de gaz sur le côté orienté vers l'intérieur des bulles de gaz, qui est soluble dans le CO₂ supercritique à une pression ≥ 150 bar, non soluble dans le CO₂ sous-critique à une pression ≤ 40 bar et non soluble dans le composant A).

13. Matériau expansé selon la revendication 12, présentant une densité de pores de ≥ 10⁷ pores à ≤ 10¹⁸ pores/cm³.

14. Matériau expansé selon la revendication 12, dans lequel la matrice solide comprend un polymère de polyuréthane.

15. Matériau expansé selon la revendication 14, dans lequel le matériau peut être obtenu à partir d'une composition sous forme d'émulsion contenant des composants en les proportions suivantes, la somme des proportions en poids étant ≤ 100 % en poids :
A) ≥ 60 % en poids à ≤ 85 % en poids d'un mélange de résines réactives de MDI et/ou pMDI avec des polyols, qui présentent un indice hydroxyle moyen ≥ 250 mg KOH/g,
B) ≥ 4 % en poids à ≤ 30 % en poids d'un tensioactif comprenant des groupes polysiloxane,
C) ≥ 5 % en poids à ≤ 30 % en poids de CO₂ et
D) ≥ 0,3 % en poids à ≤ 10 % en poids de dodécane.
